# EUROPEAN PATENT APPLICATION

(11) **EP 4 765 334 A1**
(43) Date of publication of application: **24.06.2026**
(21) Application number: 25223802.7
(22) Date of filing: 16.12.2025
(51) Int. Cl.: H01M 10/613, H01M 10/625, H01M 10/6567, H01M 50/213, H01M 50/287, H01M 50/291, H01M 50/296, H01M 50/60, H01M 10/48, H01M 50/249, H01M 50/284, H01M 50/298, B60L 50/64, B60L 58/10

(54) **BATTERY PACK WITH BATTERY MANAGEMENT CIRCUIT AND STACKED TUBING-SHAPED CASING STRUCTURE**

(30) Priority: 17.12.2024 US 202463735305 P
(71) Applicant: Xing Power Inc., Victoria, Mahe (SC)
(72) Inventor: Lin, Yu-Chung, 333 Taoyuan City (TW); Tu, Kai-Hsiang, 333 Taoyuan City (TW); Chi, Yu-Shun, 333 Taoyuan City (TW); Liao, Tzu-Wen, 333 Taoyuan City (TW); Dai, Shang-Chih, 333 Taoyuan City (TW); Chuang, Chin-Yao, 333 Taoyuan City (TW); Hsieh, Chih-Cheng, 333 Taoyuan City (TW); Wu, I-Jung, 333 Taoyuan City (TW)
(74) Representative: Straus, Alexander

(57) **Abstract**

A battery pack (3030) includes a charging-discharging circuit (0040) with at least one battery cell assembly (0010), a battery-pack enclosure (3031), high-voltage interface connectors (3063), a high-voltage switching circuit, and a battery management circuit (300). The enclosure (3031) is formed by vertically stacking at least one tubing-shaped casing (0080) and covering opposite ends with two lid modules (3090a, 3090b) to form an insulated barrier isolating the battery cell assembly (0010) from an exterior. The tubing-shaped casing (0080) may be a liquid-limiting casing (0080) configured to hold thermal-management liquid for immersion cooling. The battery pack (3030) may utilize vertical wall channels (0230) within the casing (0080) to accommodate signal lines or conductor rods (0280), thereby enabling either a distributed electrical interface configuration or a single-ended terminal configuration. The structure facilitates modular assembly, efficient thermal management, and integrated electrical control.

## Description

### Field of the Invention

The present disclosure generally relates to the integration of battery cells that is configured as a device that can both store and release electric energy. To be specific, the present disclosure generally relates to a machine that is assembled from battery cells wherein all the battery cells are immersed in thermal-management liquid while operating; and a control circuit of the machine.

### Background of the Invention

Electrical energy is widely used to power modern machines. At various stages of the life cycle of electric energy, such as generation, distribution, and consumption, the temporary storage and subsequent release of energy as needed are both significant and necessary.

A rechargeable battery cell is a device that stores electrical energy by converting it into chemical energy (i.e., during the charging process) and then reconverting it into electrical energy (i.e., during the discharging process). Depending on the application, battery cells are integrated through a variety of methods to meet the required electrical performance parameters.

The integration of battery cells, or in other words, a battery cell assembly, is typically considered a subsystem of an electric equipment. In this disclosure, the phrase "electric equipment" may be referred to an electrically powered machinery, a vehicle that has an electric motor as a prime mover, or an electric energy storage system that is connected electrically to a grid or power plant, or a computing machine (e.g. a server with IT gears, circuit boards, and/or integrated circuit component that are configured to perform computational or information processing functions). Thus, it is also critical to consider the integration between the battery cell assemblies and the electrical equipment.

Furthermore, it is well-known that integrating battery cells involves incorporating thermal management systems and battery management systems.

With the above-mentioned design considerations, optimizing the integration of battery cells and other functional elements (e.g. a control circuit) presents significant challenges.

### Summary of the Invention

The present disclosure aims at providing a battery pack with an integrated enclosure and electrical architecture for improving packaging efficiency, safety, and reliability of high-voltage energy storage systems.

This is achieved by the battery pack according to claim 1. The dependent claims pertain to advantageous further developments.

### Brief Description of the Drawings

In the following, the invention is further illustrated by way of example, taking reference to the accompanying drawings. Thereof
FIG. 1A is a conceptual circuit diagram showing a charging-discharging circuit (0040) including a battery cell assembly (0010), battery cells (0020), and battery cell strings (0030);
FIG. 1B is a system functional block circuit diagram of a battery pack according to an embodiment of the present invention;
FIG. 2A is a perspective view of an embodiment of the battery cell assembly (0010);
FIG. 2B is an exploded view of the battery cell assembly (0010) showing a cell holder (0050), cell receiving structures (0060), and electrode surfaces (0024);
FIG. 2C is a perspective exploded view of a battery cell assembly (0010) showing battery-cell-connecting members (0026) and a cell holder (0050);
FIG. 2D is a detail view showing plate-holes (0029) of the battery-cell-connecting members (0026) engaged with vertical limiting structures (0070) of the cell holder (0050);
FIG. 3A is a conceptual perspective view showing two battery cell assemblies (0010) arranged in a stacked configuration;
FIG. 3B is a conceptual perspective view showing two battery cell assemblies (0010) arranged in a side-by-side configuration;
FIG. 4A, FIG. 4B and FIG. 4C are top views of liquid-limiting casings (0080) of tubing form with a peripheral wall (0090);
FIG. 5A is a perspective view of a battery cell assembly (0010) arranged within a liquid-limiting casing (0080);
FIG. 5B is a vertically exploded view of the battery cell assembly (0010) arranged within the liquid-limiting casing (0080) showing a top opening (0094), a bottom opening (0095), and two cell holders (0050);
FIG. 6A is a top view of a rectangular liquid-limiting casing (0080) with side walls (0091) designated east (0096), south (0097), west (0098), and north (0099);
FIG. 6B is a view of a liquid-limiting casing (0080) showing inner wall surfaces (0101), outer wall-surfaces (0106), inner corners (0120), outer corners (0125), corner pillars (0130), and side walls (0091);
FIG. 6C is a view of a peripheral wall (0090) assembled from two partially surrounding walls;
FIG. 6D is a view of a peripheral wall (0090) assembled from four independent side walls (0091);
FIG. 7A, FIG. 7B and FIG. 7C are top views of a liquid-limiting casing (0080) showing cell-holder stopping structures (0140) extending inward from the inner surface of the peripheral wall (0090) and inner boundaries (0141), wherein FIG. 7C includes a battery cell assembly (0010) with a cell holder (0050) and a section line A - A';
FIG. 7D is a vertical section view taken along A - A' of FIG. 7C showing relative positions of a peripheral wall (0090), a cell-holder stopping structure (0140), and spaces above and below the stopping structure;
FIG. 7E is a view of a liquid-limiting casing (0080) showing discrete cell-holder stopping structures (0140) on an inner-north surface (0105) of a north wall (0099);
FIG. 8A is a top view showing cell-holder fixing structures (0150) within a liquid-limiting casing (0080) with fastener holes (0151);
FIG. 8B is a top view showing a cell holder (0050) with fixing fasteners (0152);
FIG. 8C is a section view along B - B' showing a cell holder (0050), a stopping structure (0140), and fixing fasteners (0152);
FIG. 9A and FIG. 9B are perspective views showing two stacked battery cell assemblies (0010);
FIG. 10A is a view of a liquid-limiting casing (0080) showing a top wall surface (0160), a bottom wall surface (0170), top surface interlocking structures (0180), and bottom surface interlocking structures (0190);
FIG. 10B is a view of two liquid-limiting casings (0080) stacked with the interlocking structures (0180, 0190) engaged;
FIG. 11A shows sealing features at an interface between liquid-limiting casings (0080) including a sealing-member-accommodating structure (0220) and a sealing-member-positioning structure (0210);
FIG. 11B shows a sealing member (0200), such as an O-ring, disposed in the accommodating structure;
FIG. 12A is a view showing a vertical-wall-channel (0230) with a PCB of a cell monitoring device (0260) associated with a battery-cell-connecting member (0026);
FIG. 12B is a view showing a vertical-wall-channel (0230) with a conductor rod (0280);
FIG. 13 is a section view of a battery pack (3030) including battery modules (3010), a terminal module (3040), an interface module (3050), and interfaces;
FIG. 14A is a conceptual diagram of a battery pack architecture showing multiple battery modules (3010) stacked between first and second interface modules (3050a, 3050b) with electrical energy interface modules (3060a, 3060b) and high-voltage interface connectors (3063) at opposite vertical ends;
FIG. 14B is a conceptual diagram of a battery pack architecture showing battery modules between a terminal module (3040) and an interface module (3050) with an electrical energy interface module (3060) and two high-voltage interface connectors (3063) on the same vertical end, and vertical-wall-channels (0230) sealed to form a vertical through hole with a conductor rod (0280);
FIG. 15A and FIG. 15B are conceptual diagrams illustrating orientations relative to a gravity vector;
FIG. 16A is a conceptual side view of the battery pack, illustrating flow fields and a stacking architecture;
FIG. 16B is a conceptual diagram illustrating a detailed configuration of the battery module;
FIG. 17 is a conceptual diagram illustrating a physical configuration of the battery pack (3030) according to an embodiment of the present invention;
FIG. 18A illustrates a perspective view of the battery pack (3030), according to an example implementation of the present disclosure;
FIG. 18B illustrates electronic connection structures of cell monitoring circuits (3110 and 3120) illustrated in FIG. 18A, according to example implementations of the present disclosure; and
FIG. 19 illustrates a circuit diagram of the BCs (0020), the cell monitoring circuit (3110), and the cell sensing circuits (3111) illustrated in FIG. 18A and FIG. 18B, according to an example implementation of the present disclosure.

### Detailed Description

Before the disclosure is described in greater detail, it should be noted that where considered appropriate, reference numerals have been repeated among the figures to indicate corresponding or analogous elements, which may optionally have similar characteristics.

To aid in describing the disclosure, directional terms may be used in the specification and claims to describe portions of the present disclosure (e.g., front, rear, left, right, top, bottom, etc.). Unless specifically defined, these directional definitions are intended to merely assist, in describing and claiming the disclosure and are not intended to limit the disclosure in any way.

The following contains specific information pertaining to example implementations in the present disclosure. The drawings and their accompanying detailed disclosure are directed to merely example implementations of the present disclosure. However, the present disclosure is not limited to merely these example implementations. Other variations and implementations of the present disclosure will occur to those skilled in the art. Unless noted otherwise, like or corresponding elements among the figures may be indicated by like or corresponding reference numerals. Moreover, the drawings and illustrations in the present disclosure are generally not to scale and are not intended to correspond to actual relative dimensions.

For consistency and ease of understanding, like features are identified (although, in some examples, not illustrated) by numerals in the example figures. However, the features in different implementations may differ in other respects, and thus shall not be narrowly confined to what is illustrated in the figures.

References to "one implementation," "an implementation," "example implementation," "various implementations," "some implementations," "implementations of the present disclosure," etc., may indicate that the implementation(s) of the present disclosure may include a particular feature, structure, or characteristic, but not every possible implementation of the present disclosure necessarily includes the particular feature, structure, or characteristic. Further, repeated use of the phrase "in one implementation," "in an example implementation," or "an implementation," do not necessarily refer to the same implementation, although they may. Moreover, any use of phrases like "implementations" in connection with "the present disclosure" are never meant to characterize that all implementations of the present disclosure must include the particular feature, structure, or characteristic, and should instead be understood to mean "at least some implementations of the present disclosure" includes the stated particular feature, structure, or characteristic. The term "coupled" is defined as connected, whether directly or indirectly through intervening components, and is not necessarily limited to physical connections. The term "comprising," when utilized, means "including but not necessarily limited to"; it specifically indicates open-ended inclusion or membership in the disclosed combination, group, series, and the equivalent.

Additionally, for a non-limiting explanation, specific details, such as functional entities, techniques, protocols, standards, and the like, are set forth for providing an understanding of the disclosed technology. In other examples, detailed disclosure of well-known methods, technologies, systems, architectures, and the like are omitted so as not to obscure the present disclosure with unnecessary details.

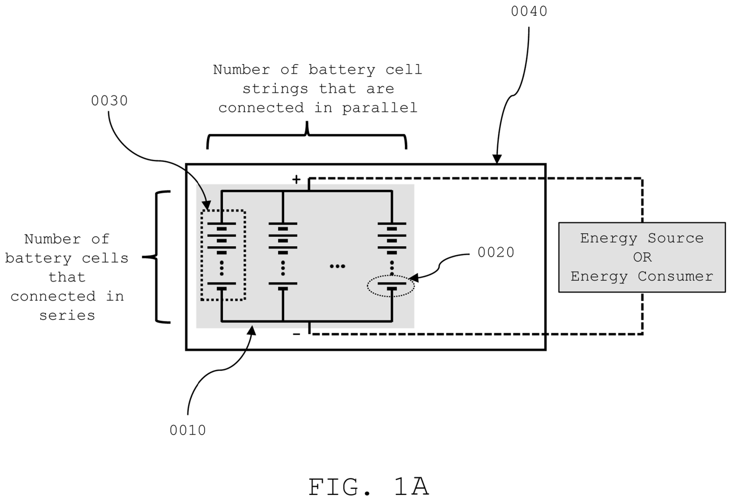

FIG. 1A is a conceptual circuit diagram of a charging-discharging circuit 0040. In FIG. 1A, the charging-discharging circuit comprises a "battery cell assembly" 0010 (hereinafter, BCA). The BCA 0010 is configured for meeting the required electrical performance, for example, a required target output voltage, Ampere or power. To meet such requirements, battery cells may be integrated, e.g. be assembled, in a mechanical and electrical manner, into a BCA 0010 to provide a collective performance.

As illustrated in FIG.1A, in some embodiments, a BCA 0010 may comprise one or more battery cell strings 0030 (hereinafter, BCS) that are connected electrically in parallel. The number of BCSs 0030 that are connected in parallel would determine the overall current output of the BCA 0010. Furthermore, each of the BCSs 0030 may comprise one or more battery cells 0020 (hereinafter, BC) that are connected electrically in series. The number of BCs 0020 in each of the BCSs 0030, that are connected in series, would determine the overall voltage output of the BCS 0030 and the BCA 0010.

The charging-discharging circuit 0040 may be connected to an energy source such as a charging station therefore to charge the BCA 0010. The charging-discharging circuit may also be connected to an energy consumer such as a prime mover of an electric vehicle therefore power the prime mover.

In some embodiments (not shown in FIG. 1A), the charging-discharging circuit 0040 may comprise more than one BCAs 0010, to meet certain design considerations such as design considerations for manufacturing and/or assembling process of the charging-discharging circuit 0040 itself or the assemble of charging-discharging circuit 0040 and the electrical equipment.

Referring back to the FIG. 1A, depending on the technology used, BCs 0020 may have different specifications in aspects such as shape, electrical performance (such as: output voltage, current, power, charging rate, discharging rate, or working temperatures, etc.), materials, and other characteristics. For example, BCs 0020 can be encapsulated in various forms, such as cylindrical, prismatic, or pouch. In this disclosure, unless specifically specified, those skilled in this art should understand that the technological features disclosed hereby would not necessarily be limited to certain type of BCs 0020.

To be configured as the fundamental component to transfer electric energy into chemical energy, or reversely, a BC 0020 may comprise positive and negative electrodes as the interface between: 1. the charging-discharging circuit 0040 to which the BC 0020 connected; and 2. the cathode material and the anode material that is encapsulated in the BC 0020.

Furthermore, BCs 0020, configured as fundamental energy-storing building blocks of the BCA 0010 and the charging-discharging circuit 0040, must be connected electrically. No matter if a BC 0020 is a cylindrical, prismatic or pouch type, the electrodes of the BC 0020 are usually disposed on the top-end, on the bottom-end, or on both ends of the body of the BC 0020 respectively. In such cases, BCs 0020 are usually mechanically aligned side-by-side, so the electrodes of each of the BCs 0020 may be aligned approximately on the same plane. As a result, the body of BCA 0010 may comprise at least one electrode-surface 0024, where the electrodes of BCs 0020 are located and distributed.

In some embodiments, BCA 0010 may comprise battery-cell-connecting members 0026 (hereinafter, BCCM) that are electrical conductors configured to connect to the electrodes of the BCs 0020. Through BCCM 0026, the BCs 0020 are electrically connected in parallel, or in series. For example, planar shaped conductor plates may be arranged on the electrode-surface 0024, to connect electrodes of the BCs 0020.

In the present disclosure, the phrase "battery pack" (hereinafter, BP) 3030 refers to an assembled, manufactured and encapsulated energy storage system, designed for integration into an electrical equipment (such as EVs, BESS, or others) that is to be powered by the electrical energy discharged from the BP 3030. It is typically produced as a distinct product, often by an entity who supplies the original equipment manufacturer (hereinafter, OEM) of the final equipment. The BP 3030 is mechanically stable to ensure its integrity during shipping and final equipment. For example, the integration and assembling processes may be an assembling process of an EV. Additionally, a BP 3030 is equipped with standardized interfaces to facilitate electrical and mechanical integration with the larger system in which it is installed. The spatial dimension of a BP 3030 is also designed with the consideration of available space of the underlying electrical equipment.

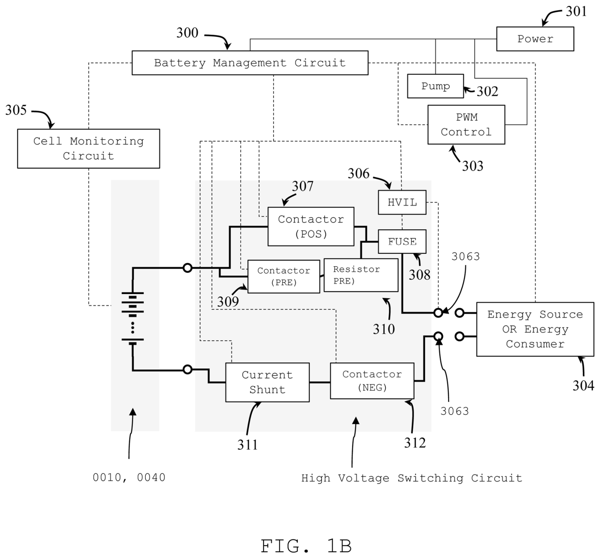

FIG. 1B is a system functional block circuit diagram of a BP 3030 according to an embodiment of the present disclosure. As shown in FIG. 1B, thick solid lines represent high-voltage loops of the BP 3030, thin dashed lines represent communication paths of low-voltage control signals or sensing signals, and thin solid lines represent low-voltage power supply paths. As FIG. 1B depicted, BP 3030 includes a charging-discharging circuit (CDC) 0040 composed of at least one battery cell assembly (BCA) 0010, and other functional blocks configured to control or manage the CDC 0040, such as battery management circuit 300.

In some embodiments, the BP may be electrically connected to a power 301 The power 301, that is configured to provide operational electrical energy to the battery management circuit 300. In an embodiment, the power 301 is an external power source independent of the battery pack (e.g., a 12V power source from a vehicle). For example, the power 301 may provide the operational electrical energy to the battery management circuit 300 via a connector (e.g., a 32-pin connector). Furthermore, the power 301 also provides the operational electrical energy to a pump 302 and a pulse-width modulation (PWM) control 303 via the low-voltage power supply paths.

The battery management circuit 300 is configured to control a high-voltage switching circuit. In an embodiment, the battery management circuit 300 includes a printed circuit board (hereinafter, PCB) having an electronic control integrated circuit (hereinafter, IC) configured as a computing core, which is referred to as a battery management unit (hereinafter, BMU). The BMU is generally a microcontroller having computing and memory functions. In addition to the BMU, the PCB of the battery management circuit 300 may further include communication circuits, voltage and current sensing circuits, power-related circuits, driving-related circuits (e.g., relays for driving contactors), or other functional circuits. The battery management circuit 300 may internally receive signals from the CDC 0040, a cell monitoring circuit 305, and the high-voltage switching circuit. The battery management circuit 300 may externally receive signals from the power 301, and an energy source or energy consumer 304. Based on calculation results, the battery management circuit 300 internally transmits control signals to control operations of the cell monitoring circuit 305 and the high-voltage switching circuit, and externally transmits and/or receives signals to the energy source or energy consumer 304.

The cell monitoring circuit 305 may be configured to detect an operational status at a level of the BCA 0010 or at a level of a battery cell. For example, the cell monitoring circuit 305 monitors parameters such as temperature, voltage, and current of a target object, performs open-circuit/short-circuit diagnosis, and compiles health information (e.g., measurement basis required for State of Charge (SoC)/State of Health (SOH)) to transmit back to the battery management circuit 300. In an embodiment, the cell monitoring circuit 305 includes one or more PCBs located close to the battery cell, and the PCB includes a cell monitoring IC or an analog front-end (AFE) configured as a measurement core. The cell monitoring IC or the AFE is also referred to as a cell monitoring unit (hereinafter, CMU). The cell monitoring circuit 305 may further include necessary communication circuits, isolated power circuits, and protection circuits. The cell monitoring circuit 305 may be internally directly connected to each BCA 0010. The cell monitoring circuit 305 may be externally interconnected with the battery management circuit 300 via isolated communication to return measurement/diagnosis data and receive measurement settings and balancing commands. Power for the cell monitoring circuit 305 may be supplied by the battery management circuit 300 or an independent isolated power source. Regarding a control path, the cell monitoring circuit 305 schedules measurement and balancing based on a strategy of the battery management circuit 300. When detecting over-voltage, under-voltage, open-circuit, or sensing abnormality, the cell monitoring circuit 305 immediately reports the abnormality and can locally stop protection actions such as balancing.

The pump 302 may be configured to drive a flow of thermal-management liquid within the battery pack to regulate a temperature of the BCA 0010. In an embodiment, the pump 302 is an electric pump powered by the power 301 via the low-voltage (e.g. may be 12 V) power supply path. The pump 302 may be hydraulically connected to a liquid circulation loop of the battery pack. For example, the pump 302 may be arranged at an inlet or an outlet of the liquid-limiting casing of the BCA 0010 to circulate the thermal-management liquid through the battery cells. The operation of the pump 302, such as an activation timing or a flow rate, is controlled by the PWM control 303.

The PWM control 303 may be configured to generate a pulse-width modulation signal to drive the pump 302. The PWM control 303 may be electrically connected to the power 301 to receive operational power and is signal-connected to the battery management circuit 300 to receive a control signal. Based on the control signal from the battery management circuit 300 (e.g., based on a temperature reading returned by the cell monitoring circuit 305), the PWM control 303 modulates a duty cycle of the pulse-width modulation signal. By adjusting the duty cycle, the rotation speed of the pump 302 is linearly or dynamically adjusted, thereby controlling the flow rate of the thermal-management liquid to achieve precise thermal management.

The high-voltage switching circuit may include a contactor (POS) 307, a contactor (PRE) 309, a resistor (PRE) 310, a contactor (NEG) 312, a current shunt 311, a fuse 308, and a high-voltage interlock loop (HVIL) 306.

The contactor (POS) 307 may be regarded as a switch for determining whether a positive terminal of the CDC 0040 is electrically conducted with an external circuit. In an embodiment, the contactor (POS) 307 includes a commercially available contactor component, which is a high-voltage switch controllable by a small current to open/close. Regarding a high-voltage circuit connection, the contactor (POS) 307 may be internally connected to the positive terminal of the CDC 0040, and may be externally connected to the fuse 308 (optional) in sequence, then connected to a positive terminal of the battery system (e.g., the battery pack) (e.g., a high-voltage interface connector (HVIC) 3063), and then indirectly connected to the energy source or energy consumer 304. Regarding a low-voltage circuit connection, the contactor (POS) 307 may be connected to the battery management circuit 300 to receive the control signals and return an operational status.

The contactor (PRE) 309 may be regarded as a switch for determining whether the positive terminal of the CDC 0040 is electrically conducted with the external circuit. PRE stands for pre-charge. In an embodiment, the contactor (PRE) 309 includes a commercially available contactor component. During pre-charging, the CDC 0040 releases electrical energy to the energy consumer 304 with a smaller current. The pre-charging step is essential. Especially when a large voltage difference exists between the entire CDC 0040 and the energy consumer 304, if the contactor (POS) 307 is directly used to discharge to the energy consumer 304, a large inrush current may be generated, which may damage circuits of the energy consumer 304. Regarding the high-voltage circuit connection, the contactor (PRE) 309 may be internally connected to the positive terminal of the CDC 0040, and may be externally connected to the resistor (PRE) 310 in sequence, then connected to the fuse 308 (optional), then connected to the positive terminal of the battery pack (e.g., the HVIC 3063), and then indirectly connected to the energy source or energy consumer 304. Regarding the low-voltage circuit connection, the contactor (PRE) 309 may be connected to the battery management circuit 300 to receive the control signals and return an operational status.

The fuse 308 provides over-current power-off protection. When an excess current occurs, the fuse 308 may be blown to disconnect the contactor (POS) 307 from the energy source or energy consumer 304 downstream. In some embodiments, the fuse 308 is integrated into a manual service disconnect (MSD) component. Regarding the high-voltage circuit connection, the fuse 308 may be internally connected to the contactor (POS) 307 or the resistor (PRE) 310. The fuse 308 is externally connected to the positive terminal of the battery pack (e.g., the HVIC 3063) first, and then indirectly connected to the energy source or energy consumer 304. Regarding the low-voltage circuit connection, the fuse 308 may be internally connected to the HVIL 306, which loops back to the battery management circuit 300.

The HVIL 306 may be a low-voltage signal loop (for logic/monitoring) that is configured to be connected signally to various high-voltage interfaces that may expose the high-voltage (high electrical potential energy) or may be in an accidently open state, e.g. these high-voltage interfaces may be at the MSD, a maintenance cover switch, a high-voltage connector, a contactor box cover, a charging port, etc.. The BMU may continuously monitor the HVIL 306. Once the HVIL 306 is opened or has an abnormal resistance value, the system may provide requisitions to disconnect main contactors (e.g., the contactor (POS) 307 and the contactor (NEG) 312) and prohibits power-on. Regarding the low-voltage circuit connection, the HVIL 306 may be connected to the fuse 308/MSD and the HVIC 3063 for detection, and a detection signal is sent back to the battery management circuit 300.

The contactor (NEG) 312 may be regarded as a switch for determining whether a negative terminal of the CDC 0040 is electrically conducted with the external circuit. In an embodiment, the contactor (NEG) 312 may include a commercially available contactor component. Regarding the high-voltage circuit connection, the contactor (NEG) 312 may be internally connected to the current shunt 311 in sequence, and then connected to the negative terminal of the CDC 0040. The contactor (NEG) 312 may be externally connected to a negative terminal of the battery pack (e.g., the HVIC 3063), and then indirectly connected to the energy source or energy consumer 304. Regarding the low-voltage circuit connection, the contactor (NEG) 312 may be connected to the battery management circuit 300 to receive the control signals and return an operational status.

The current shunt 311 may be configured to measure a high-voltage current value and provide the high-voltage current value to the battery management circuit 300 for calculation and control. The current shunt 311 may include a resistor with low resistance and high precision, and may be configured to convert a current into a voltage for measurement. The battery management system (BMS) or a current sense amplifier reads the load voltage to calculate the current flowing therethrough. Regarding the high-voltage circuit connection, the current shunt 311 may be arranged before or after the contactor, and may be generally arranged at a terminal of the contactor (NEG) 312. Taking FIG. 1B as an example, the current shunt 311 may be arranged between the contactor (NEG) 312 and the CDC 0040. Regarding the low-voltage circuit connection, the current shunt 311 may provide a measurement signal to the battery management circuit 300 for calculation and control.

In this disclosure, when referring the direction, the terms "lateral" and "laterally" refer to the directions that lies on the plane on which the electrodes of BCs 0020 of a BCA 0010 be arranged on and refer to the directions that are parallel to the lines that lie on the plane on which the BCs 0020 of a BCA 0010 side-by-side distributed. In FIGs of this disclosure, the lateral directions are marked as the directions that are parallel to the lines that lie on the y-z plane. The term "top-viewed" means the section viewing from the positive x-direction towards the minus-x-direction.

In this disclosure, the terms "vertical" and "vertically" means a direction that is not a "lateral direction" and is orthogonal to "any lateral direction". By this definition, the electrodes of the BC 0020 are usually disposed on at least one the vertical ends of the body of the BC 0020. In FIGs of this disclosure, the vertical direction refers to the direction along the x-direction.

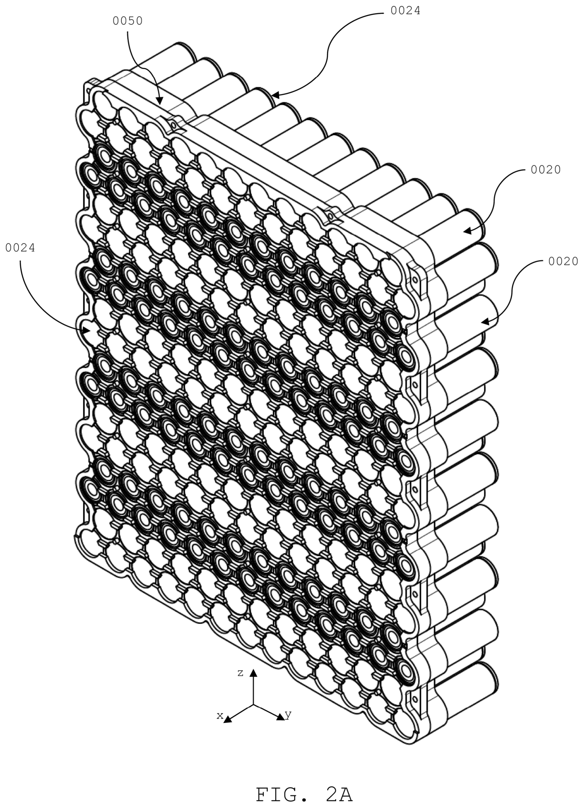

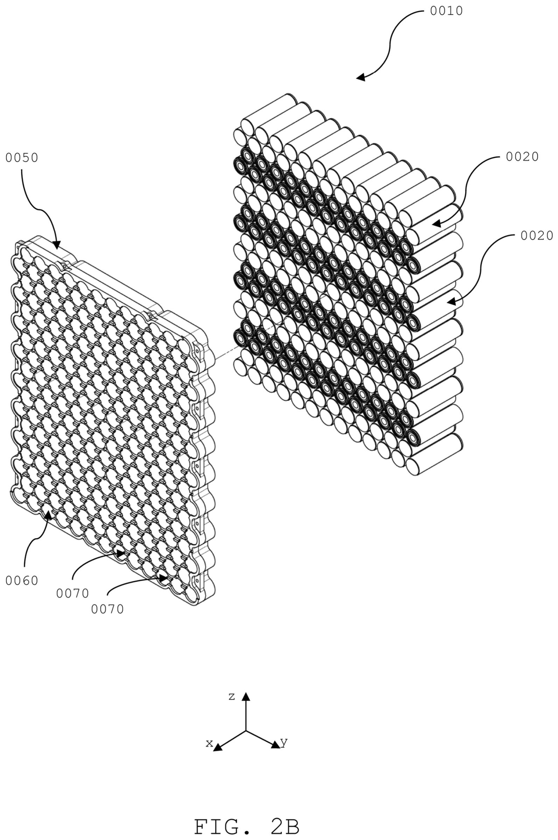

For example, referring to FIG. 2A and FIG. 2B, that are perspective views of an embodiment of BCA 0010 (not all the components of the BCA 0010 are depicted); wherein FIG. 2B is an exploded view of FIG. 2A. In FIG. 2A and FIG. 2B, the body of BCs 0020 may extend vertically (along the x-direction). Furthermore, the top-bottom axis of the BCs 0020 is parallel to the x-direction; and the BCs 0020 are side-by-side aligned along the y-z plane.

To integrate the BCs 0020 mechanically or structurally, in some embodiments, the BCA 0010 may comprise at least one cell holder 0050 which may have a primary function of limiting the position of each of the BC 0020 in a certain configuration. For example, the limiting of the position of a BC 0020 may be: 1. limiting the relative position of a specific BC 0020 respect to any other BCs 0020 that belong to the same BCA 0010 of the specific BC 0020; and 2. Limiting the relative position of a specific BC 0020 respect to the body of the BCA 0010. For example, in FIG. 2A, part of the body of each BCs 0020 are disposed in a corresponded cell receiving structures 0060 of the cell holder 0050. The cell receiving structures 0060 are distributed periodically along the lateral direction. Therefore, once the BCs 0020 are disposed in the cell receiving structures 0060, these BCs 0020 may by arranged with such periodically spatial distribution laterally.

In some embodiments, the cell holder 0050 may comprise vertical limiting structures 0070 to limit the vertical movement of the BCs 0020. The body and electrodes of all BCs 0020 of a BCA 0010 may be aligned in an identical vertical position, therefore, formed as the electrode surface 0024 of the BCA 0010. For example, in FIG. 2A, the BCA 0010 comprises two electrode surfaces 0024 at both sides of x-direction.

In some embodiments, adhesives might be used to provide the displacement limiting function. For example, after placing the BCs 0020 within the supporting holes of the cell holder 0050, glues might be introduced to fix the BCs 0020 additionally.

In some embodiments, to integrate the BCs 0020 electrically, the BCA 0010 may comprise BCCM 0026 that is located on the electrode-surface 0024. Furthermore, the BCA 0010 may comprise mechanical means that is configured to maintain the relative position between the electrode-surface 0024 and BCCM 0026 in static. For example, as the BCs 0020 are fixed mechanically with the cell holder 0050, BCCM 0026 may be connected mechanically with the cell holder 0050.

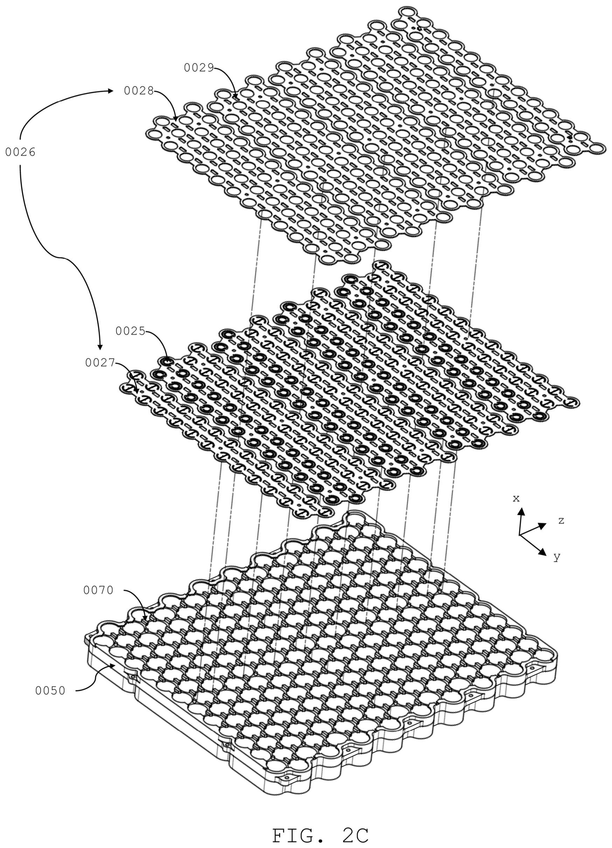

For example, in FIG. 2C, a perspective exploded view of an exemplary BCA 0010 (the BCs and some components are not shown), the BCA 0010 comprises a cell holder 0050 and BCCMs 0026. The BCCMs 0026 is conductive material that formed in plate-shaped. The BCCMs 0026 are configured to be disposed on the cell holder 0050, also, be disposed on the electrode-surface 0024 of the BCA 0010.

In some embodiments, the BCCM 0026 may comprise a cell-contact-plate 0027 and a current-transport-plate 0028.

The cell-contact-plate 0027 may be configured to directly contact the electrode of the BCs. Connecting processes such as welding, crimping, fastening, or the use of conductive adhesives, may be used to connect the cell-contact plate 0027 and the electrodes of the BCs. Furthermore, in some cases, the cell-contact plate 0027 may comprise a fusing welding structure 0025, that is configured to be melted when the current is overloaded.

The current-transport-plate 0028 may be configured to transport the collective current of multiple BCs 0020. In such a purpose, the current-transport-plate 0028 may have a greater thickness than the cell-contact-plate 0027. Furthermore, the current-transport-plate 0028 may have greater conductivity than the cell-contact-plate 0027. For example, the cell-contact-plate 0027 may be a nickel plate, and the current-transport-plate 0028 may be a copper plate.

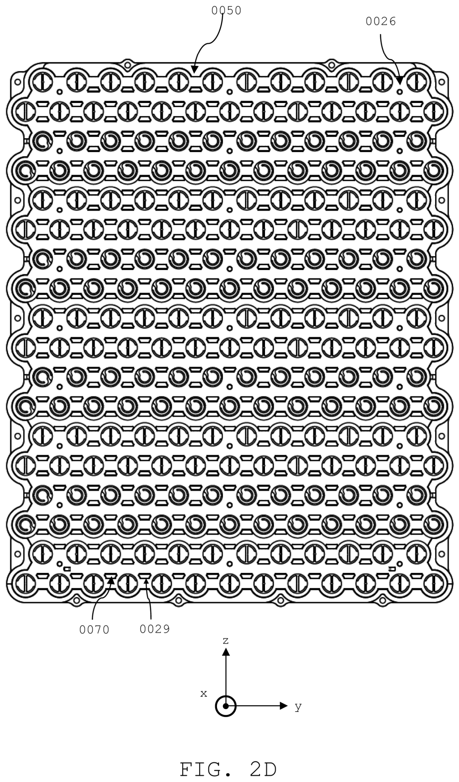

In some embodiments, the BCCM 0026 may comprise structures that are configured for arranging the BCCM 0026 on the cell holder 0050. For example, the BCCM 0026 may comprise extrusions or protrusions that are configured to be engaged with a hollow structure on the cell holder 0050. For another example, the BCCM 0026 may comprise holes that are configured to be engaged with extrusions or protrusions on the cell holder 0050. For example, in FIG. 2C and FIG. 2D, the BCCMs 0026 comprises plate-holes 0029 that is engaged with the vertical limiting structures 0070 of the cell holder 0050. The vertical limiting structures 0070 penetrate through the plate holes 0029 of the BCCMs 0026 to limit the relative movement of the BCCMs 0026 respect to the cell holder 0050. For example, the lateral and vertical relative movement of the BCCMs 0026 respect to the cell holder 0050 may be limited. In various embodiments, the mechanical engagement may be achieved via interference fits, snap-fits, fasteners, or geometric interlocking features such as the hole-and-pillar arrangement described herein.

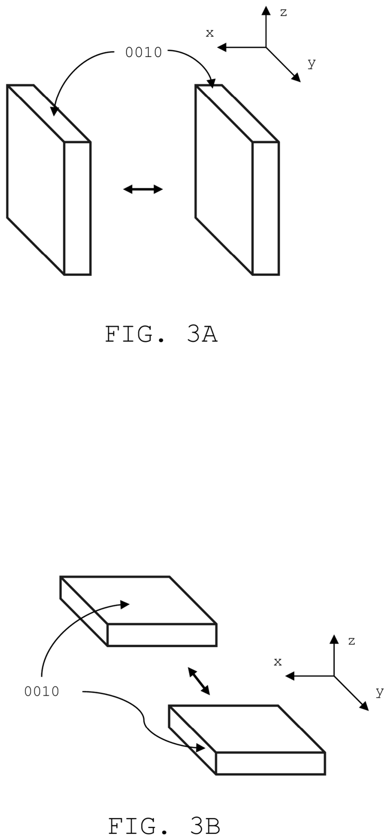

FIG. 3A and 3B are conceptual perspective views of the integration between two BCAs 0010. Depending on the available space to install the BCAs 0010 on the electric equipment, the BCAs 0010 may be integrated in a stacking manner or in a side-by-side manner. For example, in FIG. 3A, the BCAs 0010 are integrated in a stacking manner, and it's suitable to be arranged in a narrow and long space, such as the front and rear compartments of a passenger vehicle. In another example, in FIG. 3B, the BCAs 0010 are integrated in a side-by-side manner, and it's suitable to be arranged in a space with ample width but limited height, such as the floor space under the cabinet of a passenger vehicle.

In this disclosure, the terms "vertical" and "vertically" also refers to the stacking direction of the BCAs of stacking type integration. For example, in FIG. 3A, the stacking type integrated BCAs are stacked along the vertical direction, also, the x-direction.

To prevent the thermal runaway event, maintain the working temperature of the BCA 0010 and BCs 0020, or both. It is known to make the BCs 0020 directly contact thermal-management liquid, so that the thermal-management liquid may transport heat to maintain the working temperature of the BCs 0020 in a predetermined range or to prevent a combustion reaction. For example, the BCA(s) 0010 or BCs 0020 may be partially or entirely immersed in the thermal-management liquid. In the case of the entire immersion of the BCA(s) 0010, the BCA 0010 and some other components that are intended to be integrated with the BCA 0010 may direct contact with the thermal-management liquid, therefore has a better effect on thermal management.

To immerse the BCA 0010 in the thermal-management liquid, the BCA 0010 may be integrated with a liquid-limiting casing 0080 (hereinafter, LLC). The LLC 0080 may be configured to limit the movement of the thermal-management liquid. For example, in the space described by the Cartesian coordinate system, certain volumes of thermal-management liquid may have displacement or velocity that may be described by a vector comprising components of unit-vectors of x, y, or z-direction times coefficient respectively. LLC 0080 may comprise means to limit the movement of the thermal-management liquid in at least part of those six directions, to maintain the relative position between the BCA 0010 and the thermal-management liquid in state that the BCA 0010 is immersed in the thermal-management liquid.

In some embodiments, impervious materials may be used to form certain structures that entirely encapsulate or partially cover the thermal-management liquid, therefore to limit the movement of the thermal-management liquid in all directions or in some direction. For example, LLC 0080 is formed as a tubing shape with two openings, such as triangular tube, square tube or round tube. The tubing-shaped LLC 0080 may comprise a peripheral wall 0090 (or in other words, the circumferential wall).

In some embodiments, peripheral wall of the LLC 0080 may comprise impervious membranes to limit the movement of the thermal-management liquid.

In some embodiments, the LLC 0080 may comprise rigid structure such as impervious walls to limit the movement of the thermal-management liquid.

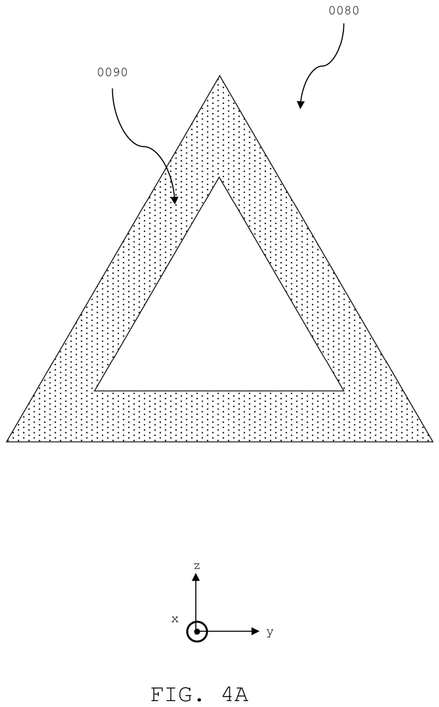

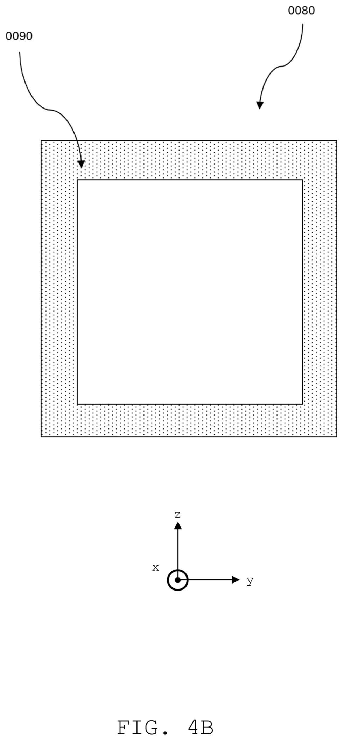

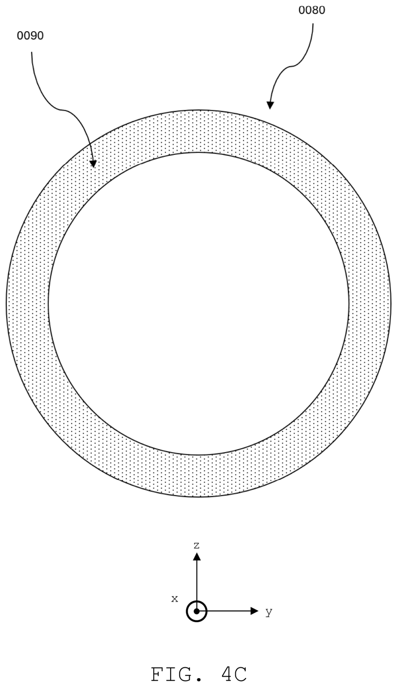

For example, FIG. 4A, FIG. 4B and FIG. 4C are conceptual LLC 0080 in tubing structures depicted in top views. In other examples, the lateral view (i.e. top view) of the tubing structure may be asymmetrical geomatics. In FIG. 4A, FIG. 4B and FIG. 4C, each of the depicted LLCs 0080 comprises a peripheral wall 0090 that surrounds a space laterally. The peripheral wall 0090 is extend vertically, i.e. along the x-direction in FIG. 4A, FIG. 4B and FIG. 4C. Therefore, the three-dimensional space surrounded by the LLC 0080 may be used to accommodate the thermal-management liquid, the BCA 0010, and some components that are intended to be integrated with the BCA 0010. With the impervious property of the peripheral wall 0090, the thermal-management liquid that accommodated in the LLC 0080 may only move in the vertical direction.

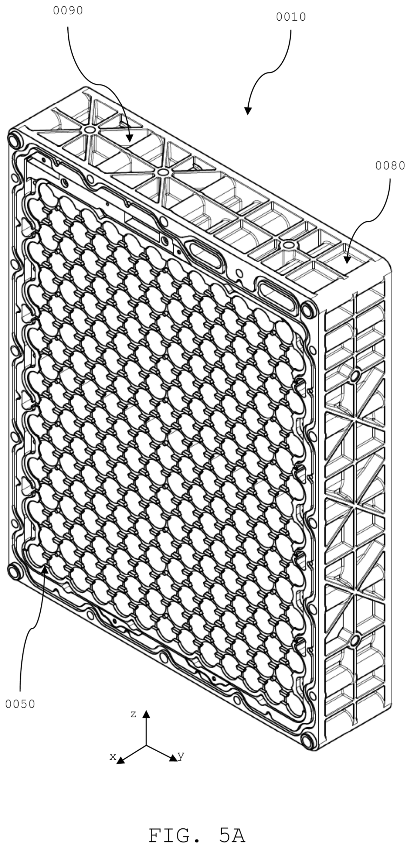

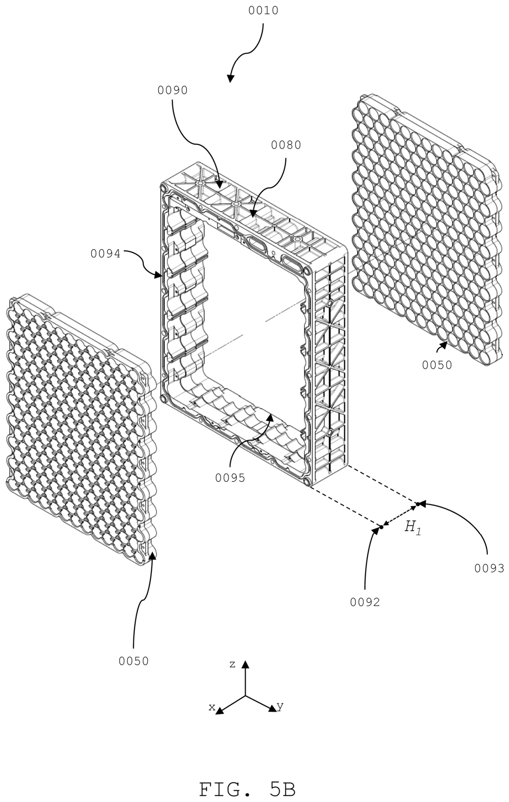

FIG. 5A and FIG. 5B are perspective views of one exemplary embodiment of the BCA 0010, where not all components of the BCA 0010 are shown, for the purpose of clearly specifying the means to make the BCA 0010 be immersed in the thermal-management liquid. For example, the BCs 0020 are not shown in FIG. 5A and FIG. 5B.

FIG. 5B is a vertically exploded perspective view of FIG 5A. In the embodiment of FIG. 5A and FIG. 5B, the BCA 0010 comprises two cell holders 0050 that are integrated with the BCs 0020 (BCs 0020 are not shown in FIG. 5A and FIG. 5B). The cell holders 0050, the BCs 0020, and some other not-shown components that are intended to be integrated with the BCA 0010 may be arranged within the space surrounded by the LLC 0080.

In the embodiments that the LLC 0080 is formed in a tubing shape, the peripheral wall 0090 is formed as a material that extends between a top vertical position 0092 and a bottom vertical position 0093, along the vertical direction. At the top vertical position 0092, the inner-edge of the peripheral wall 0090 defines a top opening 0094 of the LLC 0080; and, at the bottom vertical position 0093, the inner edge of the peripheral wall 0090 may define a bottom opening 0095 of the LLC 0080. The top opening 0094 and the bottom opening 0095 may be configured as the entrance or exit of the space surrounded by the peripheral wall 0090. Components such as the BCs 0020, cell holders 0050 and other components that are intended to be arranged within the LLC 0080, may be arranged into the inside space of the LLC 0080 through at least one of the top opening 0094 and the bottom opening 0095.

For example, in the embodiment depicted in FIG. 5B, the peripheral wall is extended between the top vertical position 0092 and the bottom vertical position 0093. The vertical length of the LLC 0080 (that is, the height) is equal to the vertical distance between the top vertical position 0092 and the bottom vertical position 0093 H1. The two cell holders are disposed into the space surrounded by the peripheral wall 0090 through the top opening 0094 and the bottom opening 0095.

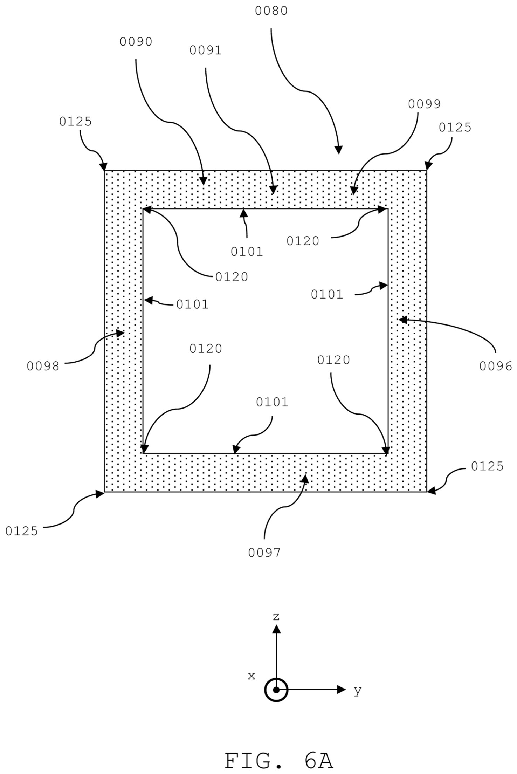

In some embodiments that the LLC 0080 are formed in a rectangular tubing shape, the peripheral wall 0090 of the LLC 0080 may further comprise four planar side walls 0091 that are arranged circumferentially surround and parallel to a vertical axis. For example, in FIG. 6A, a top view of an exemplary LLC 0080 is depicted. The LLC 0080 comprises four side walls 0091: an east wall 0096, a south wall 0097, a west wall 0098, and a north wall 0099, that are arranged circumferentially surround a vertical axis.

In some embodiments, the LLC 0080 may be manufactured through integral forming processes such as injection molding or die casting. Alternatively, a lathe machining process may be employed to produce the LLC 0080.

Referring to FIG. 6A-6B, in some embodiments that the LLC 0080 are formed in a rectangular tubing shape, the peripheral wall 0090 of the LLC 0080 may comprise four inner corners 0120 and four outer corners 0125. The four inner corners 0120 may further include: an inner-northeast corner 0121, an inner-southeast corner 0122, an inner-southwest corner 0123, and an inner-northwest corner 0124. The four outer corners 0125 may further comprise: an outer-northeast corner 0126, an outer-southeast corner 0127, an outer-southwest corner 0128, and an outer northwest-corner 0129.

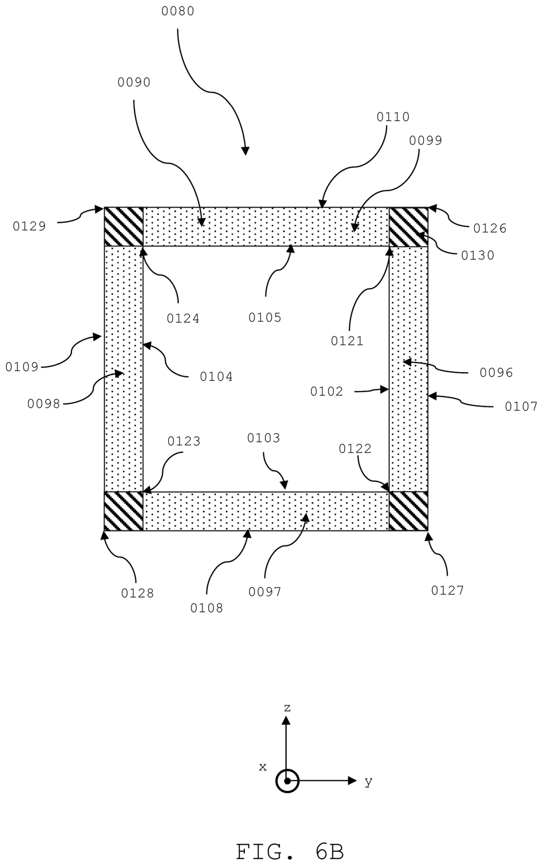

In some embodiments, each of the side walls may comprise an inner wall surface 0101 and an outer wall-surface 0106. The outer wall-surfaces 0106 of each side walls 0091 may be an outer planar surface that may extend between one of the two outer corner of the corresponding side wall 0091. For example, in FIG. 6B, the east wall 0096 comprises an outer-east surface 0107 that extends between the outer-northeast corner 0126 and the outer-southeast corner 0127; the south wall 0097 comprises an outer-south surface 0108 that extends between the outer-southeast corner 0127 and the outer-southwest corner 0128; the west wall 0098 comprises an outer-west surface 0109 that extends between the outer-southwest corner 0128 and the outer-northwest corner 0129; and the north wall 0099 comprises an outer-north surface 0110 that extends between the outer-northwest corner 0129 and the outer-northeast corner 0126.

Furthermore, the inner wall surfaces 0101 of each side walls 0091 may be an inner planar surface that extends between one of the two adjacent inner corners of the underlying side wall 0091. For example, in FIG. 6B, the east wall 0096 comprises an inner-east surface 0102 that extends between the inner-northeast corner 0121 and the inner-southeast corner 0122; the south wall 0097 comprises an inner-south surface 0103 that extends between the inner-southeast corner 0122 and the inner-southwest corner 0123; the west wall 0098 comprises an inner-west surface 0104 that extends between the inner-southwest corner 0123 and the inner-northwest corner 0123; and the north wall 0099 comprises an inner-north surface 0105 that extends between the inner-northwest corner 0124 and the inner-northeast corner 0121.

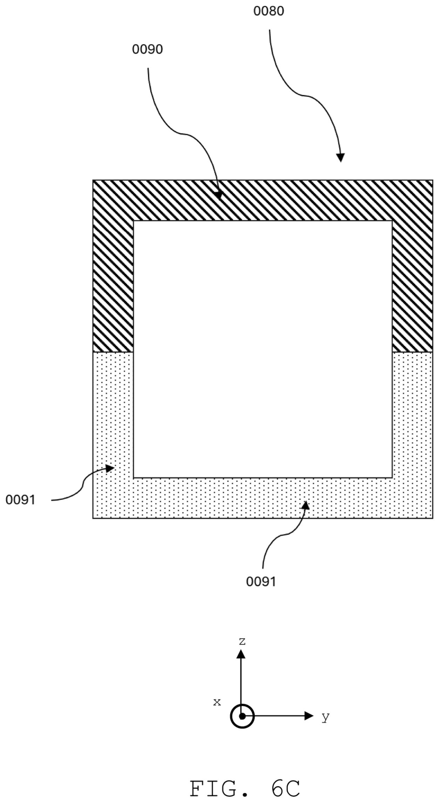

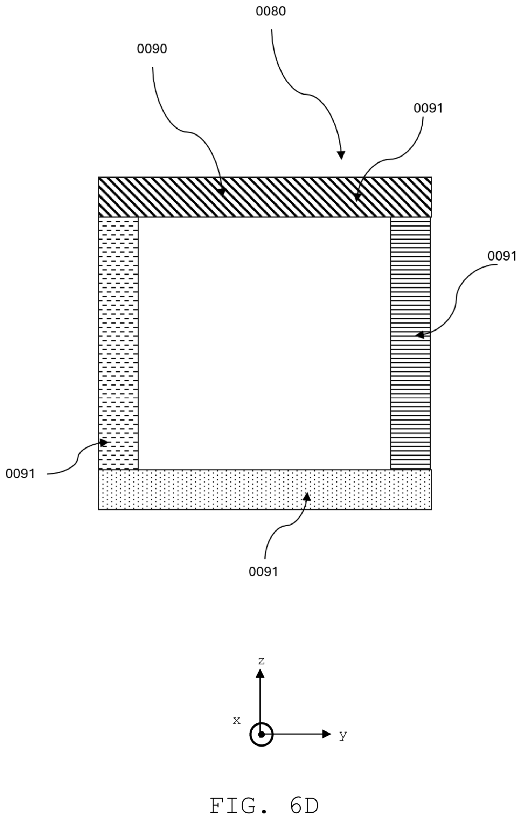

In some embodiments, the peripheral wall 0090 may be assembled by discrete components. For example, in FIG. 6B, the LLC 0080 comprises four corner pillars 0130 that are independent components to be assembled with the side walls 0091 (i.e. the east wall 0096, the south wall 0097, the west wall 0098, and the north wall 0099) to form the peripheral wall 0090. In other examples, referring to FIG. 6C, the peripheral wall 0090 may be assembled by two partially-surrounding walls. In other examples, referring to FIG. 6D, the peripheral wall 0090 may be assembled by four independent side walls 0091.

In some embodiments, the LLC 0080 may comprise structures that are configured for the integration of the cell holder 0050 and the LLC 0080. In the cases that the LLC 0080 is in the tubing shape such as depicted in FIG. 4A, FIG. 4B and FIG. 4C, the cell holder 0050 may be disposed in the space surrounded by the LLC 0080 through one of the top opening 0094 and the bottom opening 0095 at the two vertical ends of the tubing structure. The LLC 0080 may comprise at least one cell-holder stopping structure 0140 that extends from one of the inner surfaces of the peripheral wall 0090 and extends inwardly along the lateral direction.

The vertically relative position on the inner surface of the peripheral wall 0090, and the vertical size of the cell-holder stopping structure 0140 would define the vertical depth (vertical range) that the cell holder 0050 may arrive vertically in the space surrounded by the LLC. Therefore, such a lateral structure (i.e. the cell-holder stopping structure 0140) may limit the vertical movement of the cell holder 0050, by providing a vertical force on the cell holder 0050. Such vertical force is against the vertical movement of the cell holder 0050 in the space surrounded by the peripheral wall 0090.

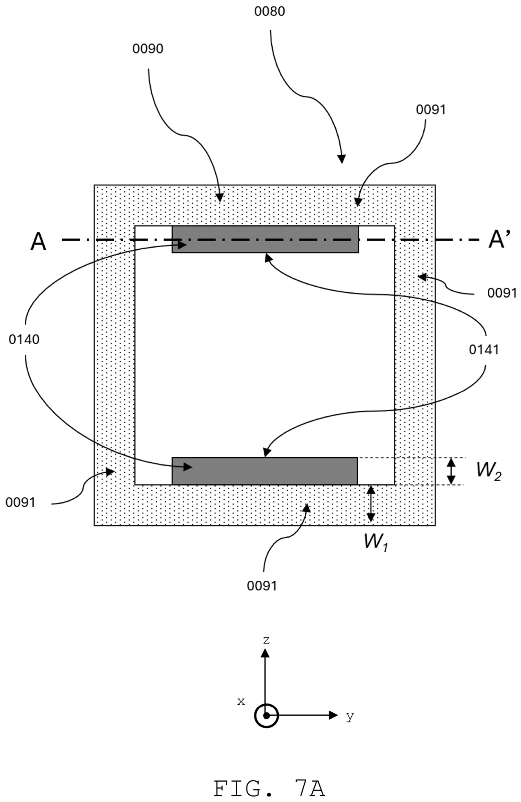

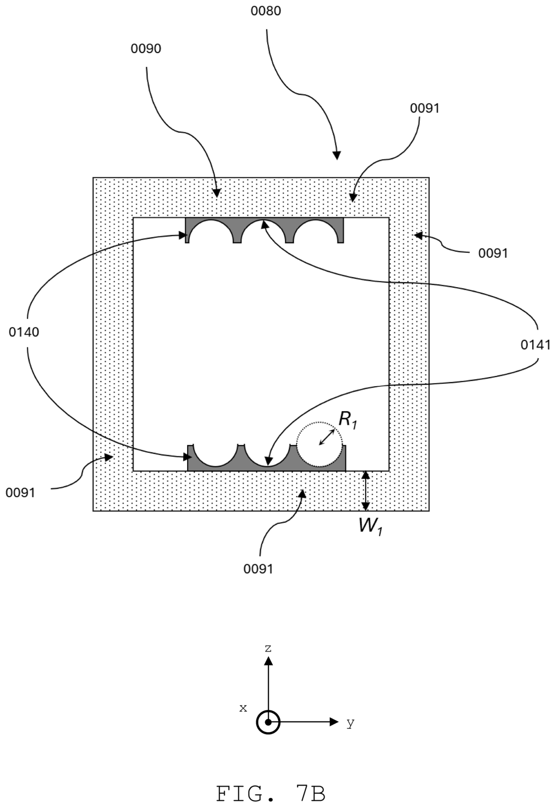

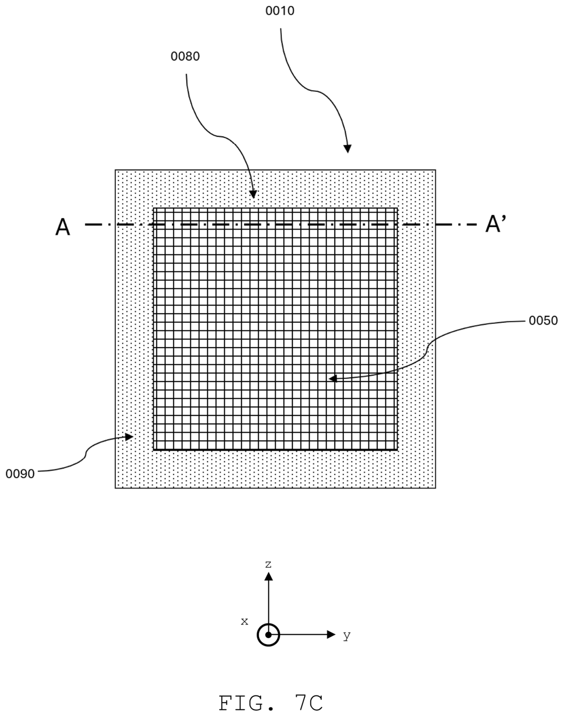

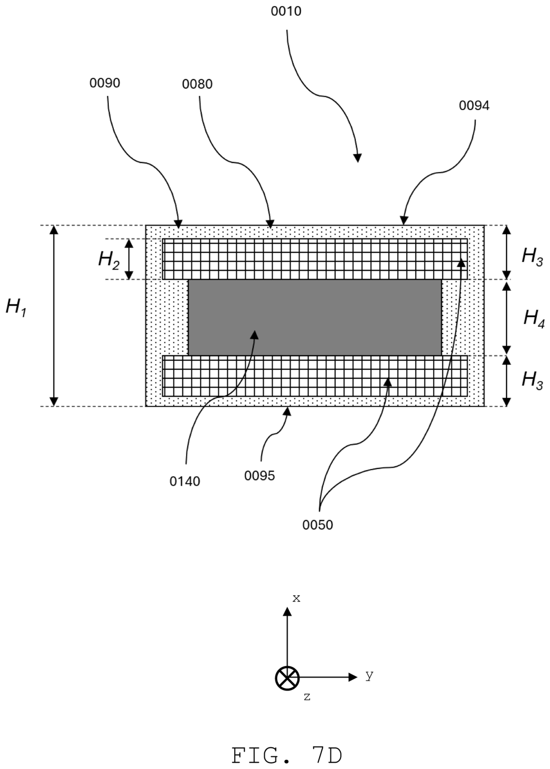

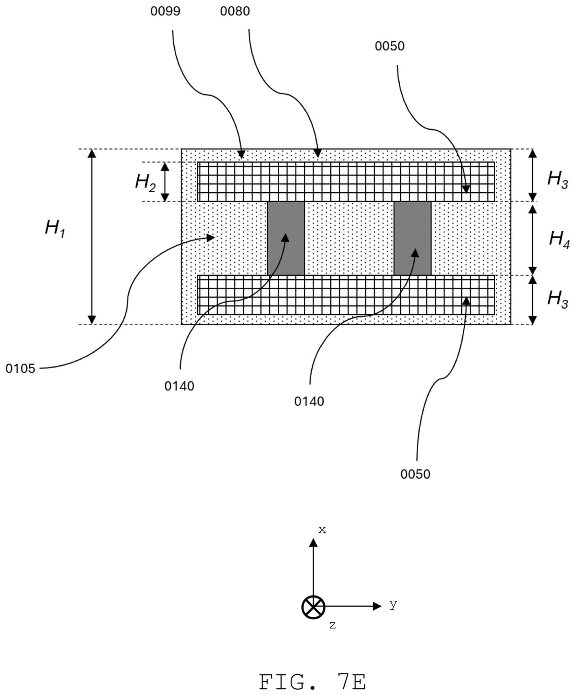

For example, FIG. 7A, FIG. 7B, FIG. 7C, FIG. 7D and FIG. 7E are conceptual diagrams of an exemplary BCA 0010. FIG. 7A, FIG. 7B and FIG. 7C are top-view of exemplary BCAs 0010. In FIG. 7A, the BCA 0010 (hidden in the FIG. 7A) is integrated with an LLC 0080, and the LLC 0080 comprises a peripheral wall 0090. The peripheral wall comprises four side walls 0091. The LLC 0080 further comprises two cell-holder stopping structures 0140 that extend laterally and inwardly from the inner surface of the peripheral wall 0090. Each of the two cell-holder stopping structures 0140 may comprise an inner boundary 0141. The lateral section view (top-view) of the inner boundary 0141 may be a line on the lateral plane. In the embodiment depicted in FIG. 7A, each of the inner boundaries 0141 is a planar surface that is parallel to the side wall on which the cell-holder stopping structure 0140 disposed; and the lateral section view of the inner boundary 0141 is a straight line along the y-direction. In FIG. 7A, the maximum distance between the inner boundary 0141 and the inner surface of the side wall 0091 on which the cell-holder stopping structure 0140 disposed is a constant number; for example, in FIG. 7A, such a constant distance is equal to W2.

In other embodiments, the inner boundaries 0141 may not be a plane, that is, the distance between the inner boundary 0141 and the inner surface of the side wall 0091 on which the cell-holder stopping structure 0140 may not be a constant number. For example, in FIG. 7B, the inner boundaries 0141 are curved surfaces; and the lateral section view of the inner boundaries 0141 are curved lines on the lateral plane.

To be noted, the inner wall surfaces 0101 of the peripheral wall 0090 could be curved surfaces, the shape of which conforms to a curved periphery of the cell holder 0050, or conforms to a curved periphery of the battery cell 0020. Since the inner wall surfaces 0101 are curved surfaces to fit the curved periphery of the cell holder 0050 or the battery cell 0020, a volume of a battery module can be reduced. The inner wall surfaces 0101 in a curved shape can also serve as a guide structure when the cell holder 0050 is placed into the LLC 0080 during the assembly process of the battery module.

In some embodiments, such as depicted in FIG. 7B, the curve-shaped inner boundaries 0141 of the cell-holder stopping structure 0140 may provide additional space to accommodate components of the BCA 0010, such as the BCs 0020 or others. In some cases, the curved part of the inner boundaries 0141 may comprise a lateral section view that is a curved line with a radius of curvature equal to or greater than the radius of the BC's laterally section-viewed radius. Therefore, the BCs 0020 may be disposed in the space that is partially surrounded by the curved parts of the inner boundaries 0141 of the cell-holder stopping structures 0140.

In FIG. 7C, an exemplary BCA 0010 is depicted. The BCA 0010 comprises a cell holder 0050 that is disposed in the space that is surrounded by the peripheral wall 0090 of the LLC 0080. The dashed line A-A' is marked respect to the section that is shown in FIG. 7D.

In FIG. 7D, the vertical section view along the dashed line A-A' in FIG. 7C is depicted. The BCA 0010 is integrated with an LLC 0080 which further comprises a peripheral wall 0090. The LLC also comprises two cell holders 0050; and two cell-holder stopping structures 0140 (only one is shown). The cell-holder stopping structure 0140 is located at the inner surface of the peripheral wall 0090. Vertically, the middle of the cell-holder stopping structure 0140 is aligned with the middle of the peripheral wall 0090.

In some embodiments, the vertical length (hereinafter, height) of the cell-holder stopping structure 0140 is less than the height of the peripheral wall 0090; therefore, the difference between the height of the cell-holder stopping structure 0140 and the height of the peripheral wall 0090 may provide a space to accommodate the cell holder 0050. For example, in FIG. 7D, the height of the cell-holder stopping structures 0140 is equal to H4, and the height of the peripheral wall 0090 is equal to H1. The difference between H1 and H4 is equal to two times of the H3. Therefore, the cell holder 0050 may be accommodated in the space between the top opening 0094 of the LLC 0080 and the cell-holder stopping structure 0140, such a space has a height equal to H3; and the cell holder 0050 may also be accommodated in the space between the bottom opening 0095 of the LLC 0080 and the cell-holder stopping structure 0140, such a space has a height equal to H3.

In some embodiments, the LLC 0080 may comprise discrete cell-holder stopping structures 0140 that are disposed on the inner surface of a side wall 0091. For example, referring to FIG. 7E, the LLC 0080 comprises a north wall 0099, and two cell-holder stopping structures that are disposed on the inner-north surface 0105.

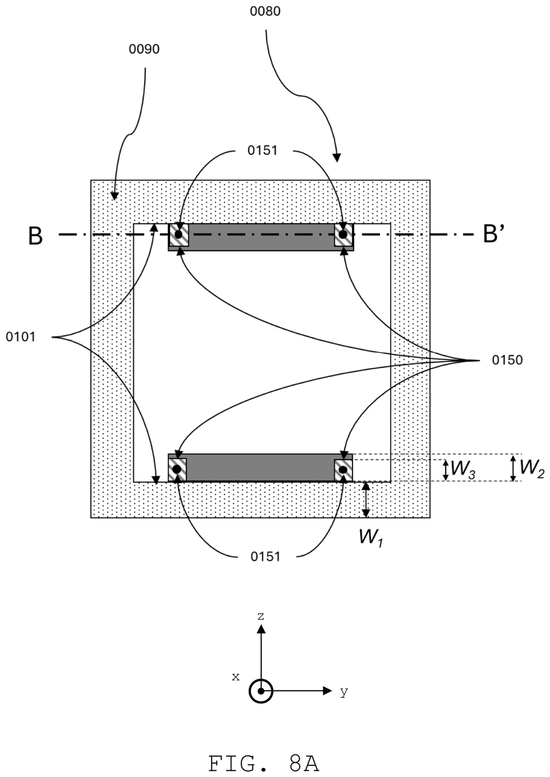

In some embodiments, the LLC 0080 may comprise at least one cell-holder fixing structure 0150 that provides mechanical means to limit the displacement of the cell holder in every direction. For example, referring to FIG. 8A, the top-viewed LLC 0080 comprises four cell-holder fixing structures 0150 that are extended from the inner wall surfaces 0101 of the peripheral wall 0090. In this embodiment, the cell-holder fixing structures 0150 comprises fastener holes 0151 for using fixing fasteners to limit the relative movement between the LLC 0080 and the cell holder 0050. In some embodiments, the cell-holder fixing structure 0150 and the cell-holder stopping structure may be different in multiple aspects such as shape, lateral position, and vertical position.

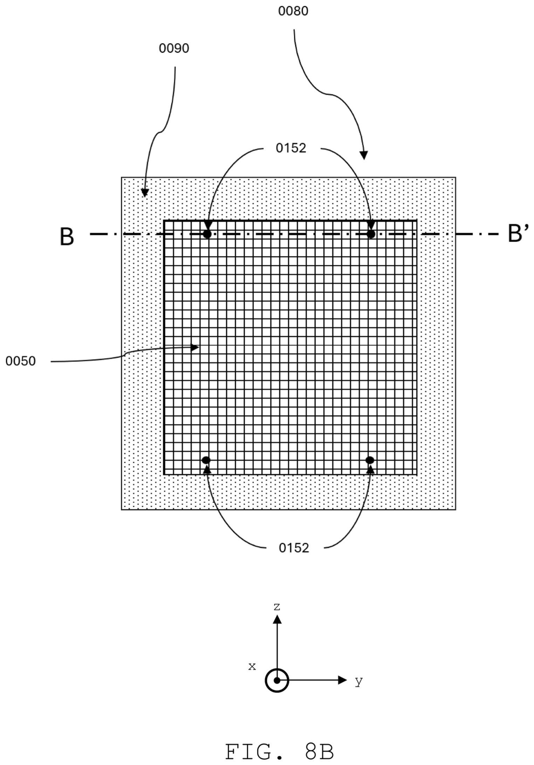

Referring to FIG. 8B, a top view of the LLC 0080 is depicted. In FIG. 8B, the cell holder 0050 is disposed in the space surrounded by the peripheral wall of the LLC 0080. The LLC 0080 comprises four fixing fasteners 0152 that are vertically inserted through the cell holder 0050 and the cell-holder fixing structures 0150 (not shown in FIG. 8B).

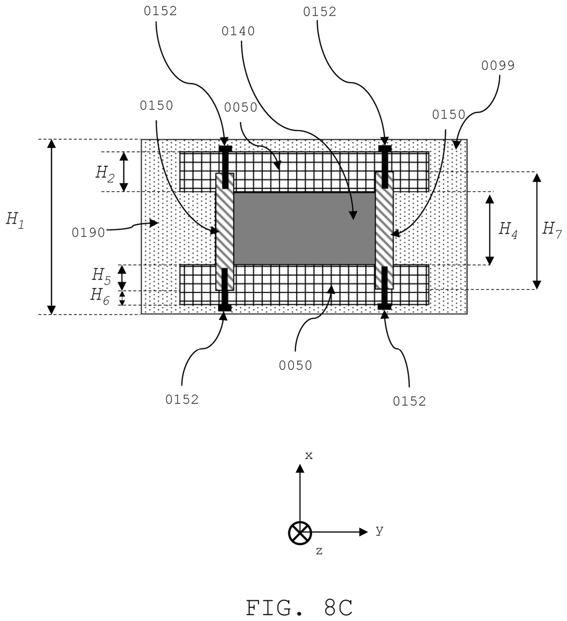

Referring to FIG. 8C, a section view along the dashed-line B-B' of the LLC 0080 depicted in FIG. 8B. As illustrated, the cell holder 0050 is stopped vertically by the cell-holder stopping structure 0140 and is fixed with the LLC 0080 by fastening the cell holder 0050 and the LLC 0080, by the fixing fasteners 0152.

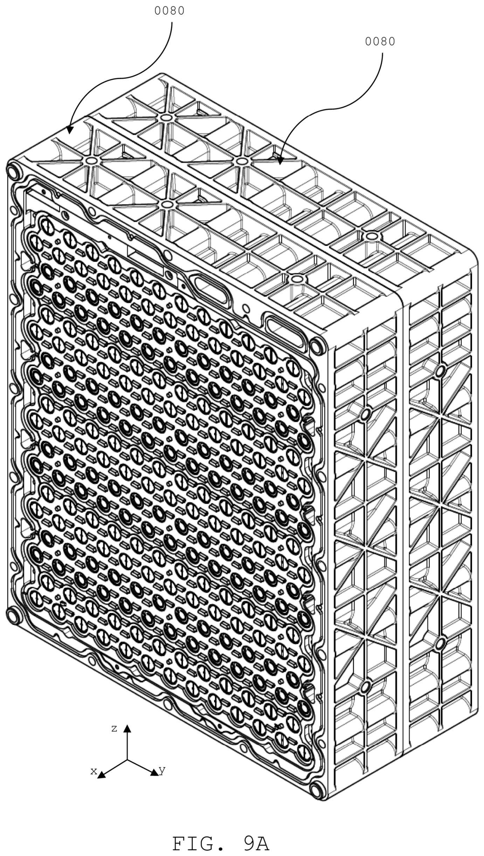

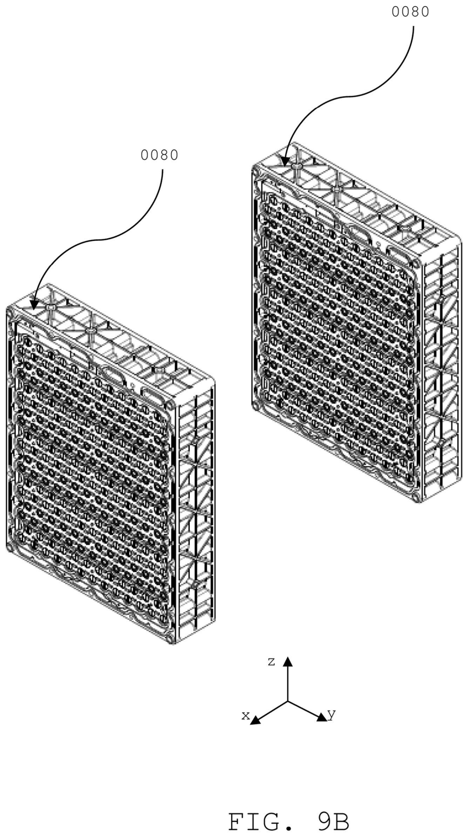

Referring to FIG. 9A and FIG. 9B, which are perspective views of the stacking of two BCAs (with LLC 0080 integrated).

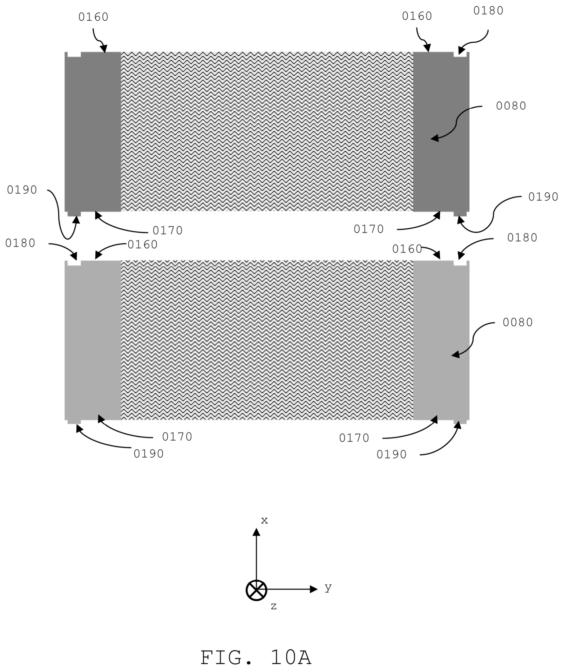

In some embodiments, as illustrated in FIG. 10A, LLC 0080 may comprise a top wall surface 0160 and a bottom wall surface 0170 that are surfaces, that extend along the lateral direction, of the vertical ends of the LLC 0080.

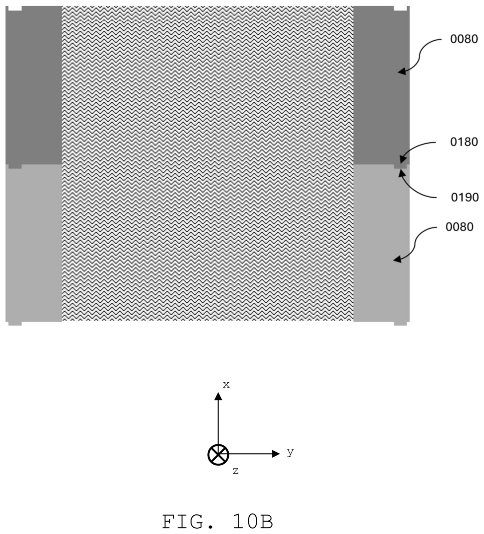

In some embodiments, the top wall surface 0160 and bottom wall surface 0170 may comprise complementary interlocking features configured to resist lateral shear when vertically stacked. For example, the top wall surface 0160 may comprise at least one top surface interlocking structures 0180, and the bottom wall surface 0170 may comprise at least one bottom surface interlocking structures 0190, as illustrated in FIG. 10A. The top surface interlocking structures 0180 and the bottom surface interlocking structures 0190 may be located at certain lateral positions so that when two LLCs 0080 are stacked vertically (as illustrated in FIG. 10B), the top surface interlocking structures 0180 and the bottom surface interlocking structures 0190 may combined and therefore provide lateral forces to limit the relative displacement between the two stacked LLCs 0080. For example, a pair of top surface interlocking structure 0180 and bottom surface interlocking structure 0190 may be a protrusion structure and a receiving structure.

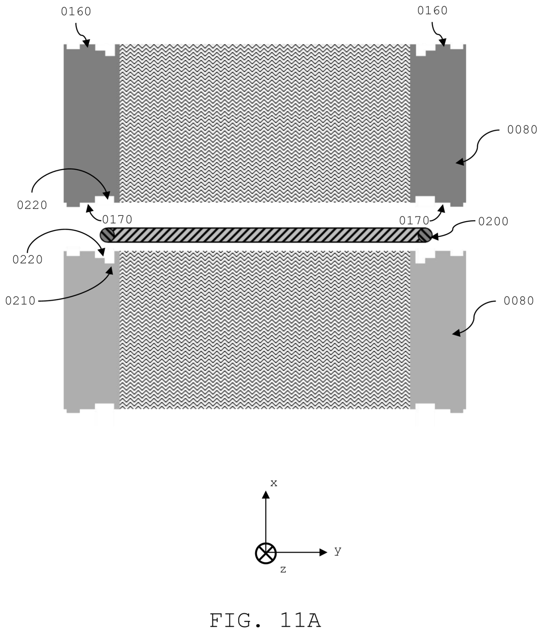

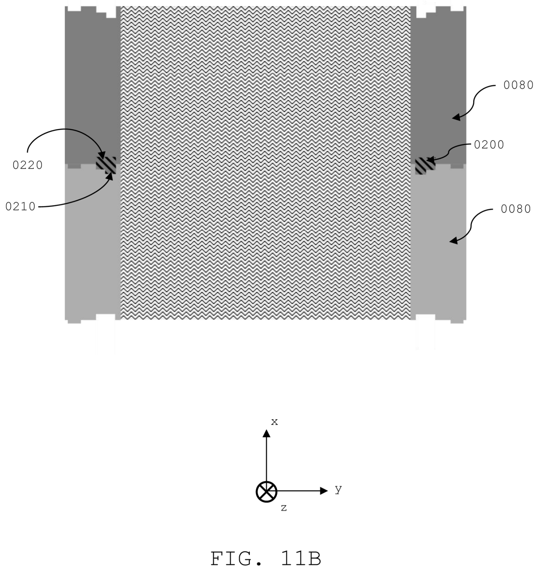

Referring to FIG. 11A and FIG. 11B, in some embodiments, at least one of the top wall surface 0160, the bottom wall surface 0170 or both, may comprise at least one sealing-member-accommodating structure 0220, that is configured to provide a space to accommodate sealing members that is arranged at the interface of two LLCs 0080 to prevent liquid leaking from the interface of the two LLCS. For example, the sealing member 0200 may be an O-ring or adhesive materials. In some embodiments, the bottom wall surface 0170 or both, may further comprise at least one sealing-member-positioning structure 0210 that is configured for limiting the lateral movement of the sealing member 0200. For example, in FIG. 11A and FIG. 11B, the sealing-member-positioning structure 0210 is a gap configured to provide the lateral force to limit the lateral movement of the sealing member 0200. As depicted in FIG. 11B, the sealing member 0200 may be filled with the space provided by the sealing-member-accommodating structure 0220 to provide the sealing effect.

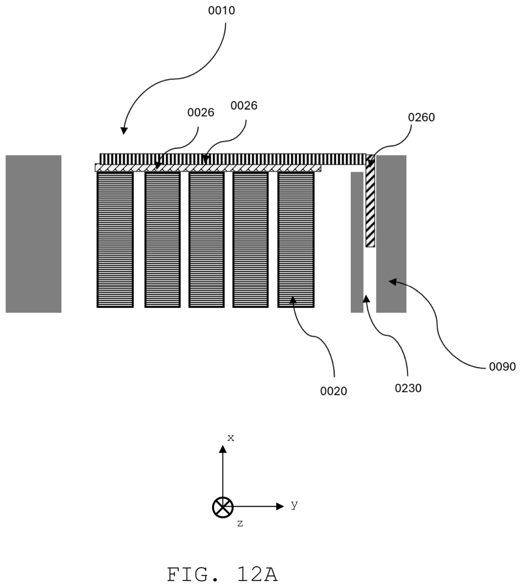

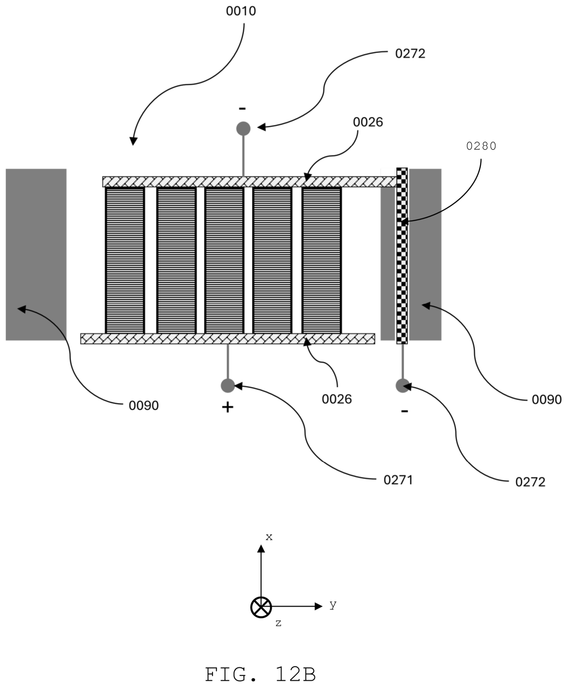

In some embodiments, the peripheral wall 0090 may comprise vertical-wall-channel 0230 that is a hollow space in the peripheral wall 0090. The vertical-wall-channel 0230 may be a through-hole that penetrates the peripheral wall 0090 vertically. The vertical-wall-channel 0230 may be used to accommodate a PCB of a cell monitoring device 0260, which is signally connected to the BCCM 0026 of the BCA 0010, as in FIG. 12A. The vertical-wall-channel 0230 may be used to accommodate a conductor rod 0280, which is used to make both of the positive electrode 0271 and negative electrode 0272 to be disposed at the same terminal of the BCA 0010, as in FIG. 12B.

As disclosed in the '417 application (i.e., Application No. 18/211,417), the vertical-wall-channel 0230 may be used to provide a vertical flow channel that allows the liquid flow vertically. For example, the vertical-wall-channel 0230 may refer to the "inlet channel" and "outlet channel" that is disclosed in the'417 application.

In some embodiments, a BCA 0010 may be integrated with components to form a battery module (hereinafter, BM) 3010. For example, BM 3010 may be an assembly that is composed of a BCA 0010 and other components such as: an LLC 0080, heat-regulating components such as heat-dissipation-components, battery-cell monitoring circuit, and other components. The manufacturing of a BM 3010 is usually an intermediate step in the production of the whole system. That is, the BM 3010 is considered as an intermediate building block to form a higher-level energy storage system, while the BM 3010 is also integrated by a more fundamental building block - the BCs 0020. Therefore, the BM 3010 may also comprise modular interfaces that are configured to integrate the BM 3010 to other BM 3010, and/or to other modules of the underlying larger energy storage system. For example, the BM 3010 may comprise modular-electric-energy-interfaces 3020 (hereinafter, MEEI), that is configured to provide electrical connection for the communication (to charge or to discharge) of the electrical energy of the that is stored in or released from the BM 3010. The MEEI 3020 may be electrodes or connectors disposed on the BM 3010. For example, the MEEI 3020 may be a conductor that directly contacts one of the current-transport-plates 0028 of a first BM 3010, and also directly contacts one of the current-transport-plates 0028 of a second BCA 0010. Such a MEEI 3020 then functions as the electric connector between the two BMs 3010.

For example, the BM 3010 may comprise interfaces of the heat-regulating components such as a liquid connector for a thermal-controlling liquid to flow into and out of a BM 3010 to another liquid container or channel, such as the top opening 0094 and the bottom opening 0095 of the LLC 0080. For example, the BM 3010 may comprise interfaces for connecting mechanically to another BM and/or to other modules, such as the top surface interlocking structures 0180 and the bottom surface interlocking structures 0190.

In the present disclosure, the phrase "battery pack" (hereinafter, BP) 3030 refers to an assembled, manufactured and encapsulated energy storage system, designed for integration into an electrical equipment (such as EVs, BESS, or others) that is to be powered by the electrical energy discharged from the BP 3030. It is typically produced as a distinct product, often by an entity who supplies the original equipment manufacturer (hereinafter, OEM) of the final equipment. The BP 3030 is mechanically stable to ensure its integrity during shipping and final equipment. For example, the integration and assembling processes may be an assembling process of an EV. Additionally, a BP 3030 is equipped with standardized interfaces to facilitate electrical and mechanical integration with the larger system in which it is installed. The spatial dimension of a BP 3030 is also designed with the consideration of available space of the underlying electrical equipment.

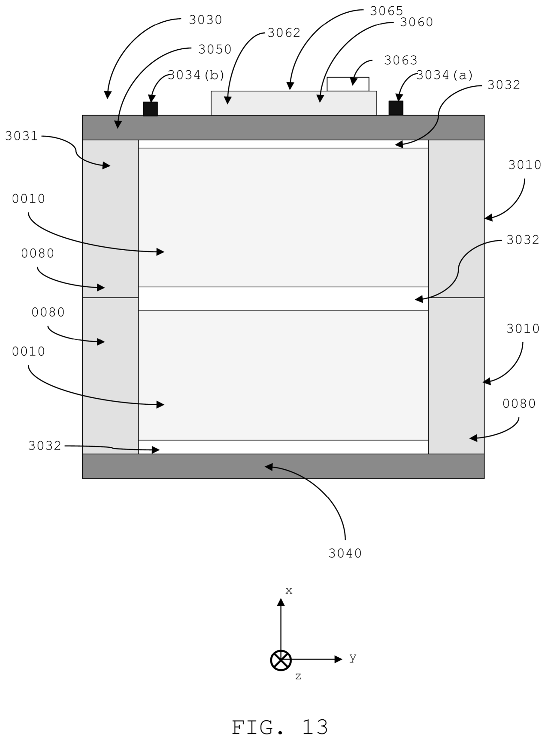

Referring to FIG. 13, which is a concept diagram of a section view of a BP 3030. In some embodiments, as depicted in FIG. 13, the BP 3030 may comprise two BMs 3010 that are assembled with each other in a stacking manner. In other cases, the BP 3030 may comprise only one BM 3010 or more than two BMs 3010. The BP may also comprise a terminal module (hereinafter, TM) 3040 that serves as a lid of the BP 3030. The TM 3040 provides electrical insulation so that the BCs 0020 (not shown in FIG. 13) are electrically isolated from the external of the BP 3030. The BP 3030 may also comprise an interface module (hereinafter, IM) 3050. The IM 3050 serves not only as a lid but also as an interface of the BP 3030. It is noted that each of BMs 3010 in FIG. 13 may be formed (assembled) by an LLC 0080 and a BCA 0010 as previously disclosed in this disclosure.

In some embodiments, the BP 3030 may be liquid-tight so that the BCAs 0010 of the BMs 3010 enclosed in the BP 3030 may be immersed by thermal-management liquid. For example, the LLCs 0080 of each BMs 3010, the TM 3040 and the IM 3050 is assembled to form a liquid-tight "battery-pack enclosure" 3031 (hereinafter, BP-enclosure). In such an example, the BP-enclosure 3031 is assembled by the LLCs 0080 that provides lateral fluid barrier, and lids on the vertical terminal ends provide vertical fluid barriers. For example, the lids may be the TM 3040 or IM 3050. These lateral and vertical fluid barriers define a "battery-pack space" 3032 (here after, BP-space) that is enclosed by the BP-enclosure 3031 (while enclosed by those vertical and lateral fluid barriers).

In some embodiments, the BP-enclosure 3031 may be electrically insulated so that the circuit encapsulated inside the BP-enclosure 3031 does not leak to the outside. For example, the LLC 0080 and the lids may be formed of electrically insulating materials, or may each include at least one layer of an electrically insulating material.

In some embodiments, the TM 3040 and the IM 3050 may also comprise mechanical interfaces for mating, connecting, or sealing to a corresponding BM 3010 or the corresponding LLC 0080. For example, TM 3040 may comprise top surface interlocking structures 0180 and the IM 3050 may comprise bottom surface interlocking structures 0190. For example, the TM and the IM may comprise the sealing member sealing-member-accommodating structure 0220 as earlier mentioned in this disclosure.

As depicted in FIG. 13, the BP 3030 may also comprise an "electrical energy interface module" (hereinafter, EEIM) 3060. The EEIM 3060 may comprise an EEIM-casing 3062 which encloses or surrounds an EEIM-space 3061 (not shown in the FIG. 13) that is configured for accommodating circuits for battery management, high-voltage circuits (e.g. the circuit for relaying the high-voltage electrical energy of the BP 3030 to a downstream load such as the EV), or both. The EEIM-casing 3062 may be integrally formed or formed from a plurality EEIM-walls 3065. For example, EEIM-walls 3065 may be portions of the integrally formed EEIM-casing 3062 or may be independent components. The EEIM 3060 may be disposed on the IM 3050 through an assembling process.

In some embodiments, the IM 3050 may comprise an IM-casing 3052 which encloses or surrounds an IM-space 3054 (not shown in the FIG. 13) that is configured for accommodating component that is configured for interfacing the BM 3010 and the EEIM 3060.

In some embodiments, the IM 3050 may further comprise an IM-busbar 3053 (not shown in FIG. 13). One terminal of the IM-busbar 3053 is configured to be electrically connected to the MEEI 3020 of the BM 3010; and another terminal end of the IM-busbar 3053 is configured to be electrically connected to high-voltage circuits arranged in the EEIM-space 3061. The EEIM 3060 may comprise "high-voltage interface connectors" 3063 (hereinafter, HVIC), which may be arranged on the EEIM-casing 3062 or may be arranged on the BP-enclosure 3031. The HVICs 3063 may be configured to directly contact the high-voltage circuits arranged in the EEIM-space 3061, therefore the HVIC 3063 may function as the high-voltage circuit interface between the charging-discharging circuit 0040 and the electric equipment. Therefore, the HVIC 3063 may be considered as the terminals of the charging-discharging circuit 0040.

In the present disclosure, the interface module 3050 and the terminal module 3040 (which serve as vertical lids and may be collectively referred to as "lid modules") may each comprise at least one "lid electrical interface" configured to provide an electrical connection path therein. The lid electrical interface is electrically connected between the HVIC 3063 and the MEEI 3020 of the battery module. In some embodiments, the lid electrical interface may be implemented as a rigid busbar (e.g., the IM-busbar 3053), a flexible busbar, a wire cable, a conductive trace on a PCB, or any other suitable conductive member capable of transmitting high-voltage electrical energy.

In some embodiments, the EEIM-space 3061 and BP-space 3032 may be hydraulically continuous, so that the components in the EEIM-space 3061 may be immersed by the thermal-management liquid.

In other embodiment, the EEIM-space 3061 and BP-space 3032 may be hydraulically isolated. In such cases, the IM 3050 may comprise at least one IM-electric-channel 3051 (not shown in the figures) that is configured to provide a channel between the EEIM-space 3061 and BP-space 3032. For example, the IM-channel 3051 may be a through-hole disposed on the side wall of the IM 3050. In some embodiments, the IM-busbar 3053 (not shown in the figures) may be disposed in the IM-electric-channel 3051 and extend to the EEIM-space 3061 and the BP-space 3032 to provide electrical connection between the components in these two accommodation spaces. In some embodiments, to prevent the liquid passing through the IM-electric-channel 3051, the IM 3050 may further comprise at least one sealing member such as an O-ring that is arranged in the IM channel 3051 and is mated tightly both with the inner-wall of the IM-electric-channel 3051 and with the IM-busbar 3053.

In some embodiments, the BP 3030 may comprise at least one liquid interface 3034 for introducing liquid into and/or out of the BP 3030. For example, the liquid interface may be a liquid connector that is disposed on the BP enclosure 3031. For example, the liquid interface 3034 may be disposed on a wall of the IM 3050 or a wall of the TM 3040 as an inlet and/or outlet. In some embodiments, the BP 3030 may comprise a first liquid interface 3034(a) as an inlet of the BP-enclosure 3031 and a second liquid interface 3034(b).

In some embodiments, the liquid interface 3034 may be configured to connect to an external liquid circulation system, such as a liquid source or a liquid circulation system with a pump.

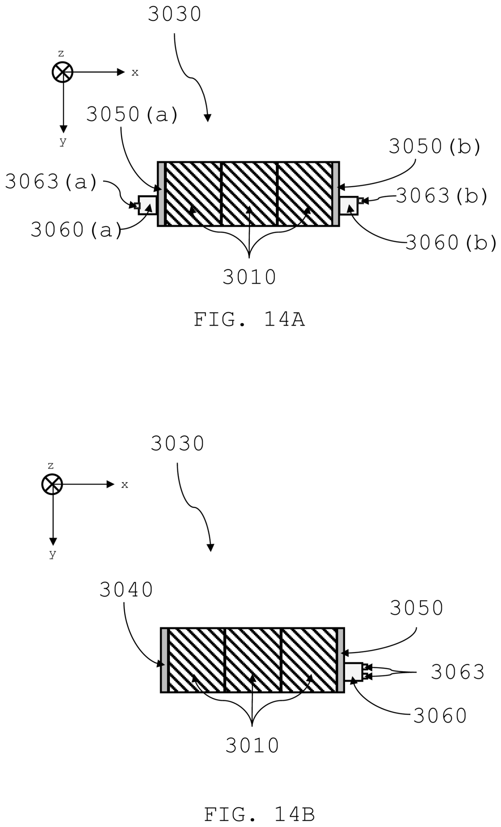

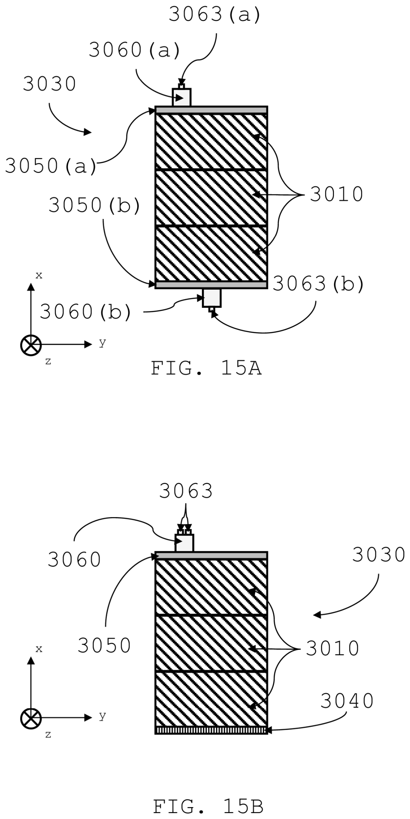

FIG. 14A, FIG. 14B, FIG. 15A and FIG. 15B are conceptual diagrams of embodiments of BP 3030.

In some embodiments, as depicted in FIG. 14A, the BP 3030 may comprise multiple BMs 3010 that are stacked in the vertical direction. The BP 3030 may further comprise and be assembled with a first IM 3050(a) configured as a first vertical lid and a second IM 3050(b) configured as a second vertical lid at the opposite vertical ends of the stacked BMs 3010. The BP 3030 may further comprise a first EEIM 3060(a) and a second EEIM 3060(b). The first EEIM 3060(a) is disposed on the first IM 3050(a) and the second EEIM 3060(b) is disposed on the second IM 3050(b). The first EEIM 3060(a) may further comprise a first HVIC 3063(a) that is disposed at one of the two vertical ends of the BP 3030; and the second EEIM 3060(b) may further comprise a second HVIC 3063(b) that is disposed at the other vertical end of the BP 3030. Such a configuration is configured for connection to a downstream load with terminals disposed separately.

In some embodiments, as depicted in FIG. 14B, the BP 3030 may comprise multiple BMs 3010 that are stacked in the vertical direction. The BP 3030 may further comprise and be assembled with a TM 3040 configured as a first vertical lid and an IM 3050 configured as a second vertical lid at the opposite vertical ends of the stacked BMs 3010. The BP 3030 may further comprise an EEIM 3060. The EEIM 3060 is disposed on the IM 3050. The EEIM 3060 may further comprise two HVICs 3063 that are disposed on the same one of the two opposite vertical ends of the BP 3030. Such a configuration is configured for connection to a downstream load with terminals disposed closely. The LLCs 0080 may further comprise the vertical-wall-channels 0230. The vertical-wall-channels 0230 of each LLCs 0080 may be sealed together to form a vertical through-hole vertically extends through the entire assembly of the stacked BMs 3030. The BP 3030 may further comprise a conductor rod 0280 that is configured to make the first electrode and the second electrode of the circuit formed by all the battery cells connected in series and/or in parallel being both disposed at the second vertical end of the entire assembly of the stacked BMs 3030.

In some embodiments, the conductor rod 0280 may be connected to a first electrode of the circuit formed by electrically connecting all the BCs 0020 in series and/or in parallel through the BCCMs 0026 and MEEIs 3020, at a first vertical end of the entire assembly of the stacked BMs 3030, the first vertical end being adjacent to the TM 3040. The conductor rod may be arranged in the vertical through-hole, may extend vertically along the vertical through-hole that vertically extends through the entire assembly of the stacked BMs 3030, and may protrude from a second vertical end of the entire assembly of the stacked BMs 3030, the second vertical end being adjacent to the IM 3050. Thus, the first electrode and the second electrode of the circuit formed by all the battery cells connected in series and/or in parallel are both disposed at the second vertical end of the entire assembly of the stacked BMs 3030.

In some embodiments, when the HVICs 3063 of the BP 3030 are disposed at the same vertical end of the stacked BMs 3020, the HVICs 3063 of the BP 3030 may be arranged on the same vertical end of the stacked BMs 3020. Such an arrangement facilitates system integration, since both the liquid connection to the external coolant channels and the electrical connection to the downstream load can be implemented from the same side of the battery pack. This not only reduces the complexity of installation and maintenance, but also improves the compactness and reliability of the battery pack assembly.

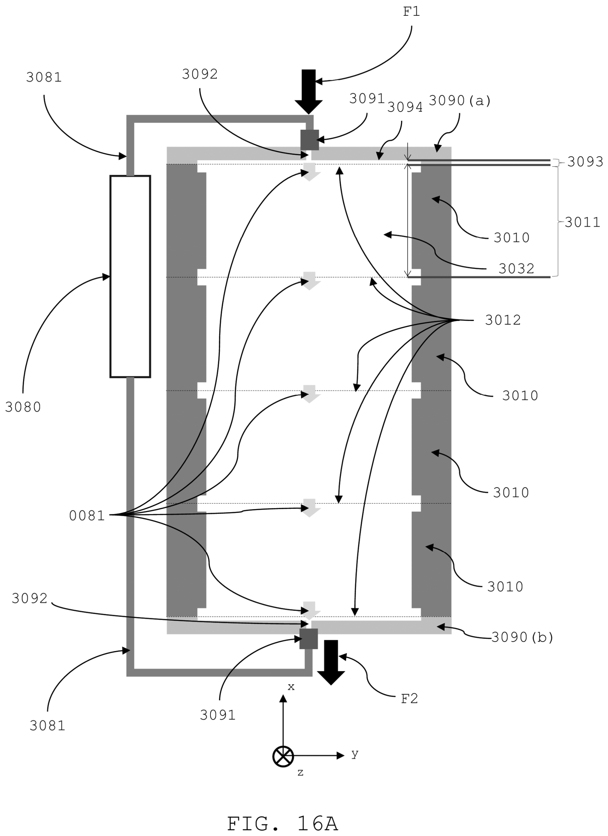

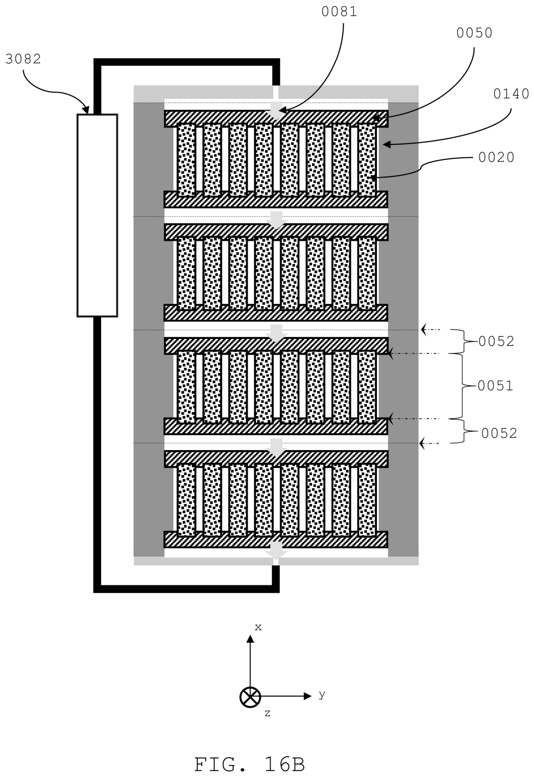

Please refer to FIG. 16A, which is a conceptual perspective diagram of a cross-sectional view of the BP 3030. Components both mentioned in this embodiment and the aforesaid embodiments or with similar reference numerals represent components with similar structures or functions, and the related description is omitted herein. To be noted, FIG. 16A, FIG. 16B, is not a precise cross-sectional view of the BP 3030. FIG. 16A is intended to illustrate multiple structural features of the BP 3030 that can be observed from the cross-sectional view. Although these structural features are shown on the same plane, it does not mean that these technical features must be located in the same x-y section. Furthermore, the term "lateral" refers to any vector on the y-z plane in FIG. 16A, FIG. 16B. For example, a lateral liquid flow could be a liquid flow on the y-z plane that moves only in the z-direction; a lateral channel could be a channel located on the y-z plane that extends only in the z-direction.

In some embodiments, the BP 3030 could be communicated with the circulation and heat exchange system 3080 to form a closed-loop liquid circulation system. When the closed-loop liquid circulation system is filled with liquid and pressure is applied by a pump to activate liquid circulation, the liquid flow is generated accordingly.

In general, a battery pack is assembled by a plurality of BMs and lid modules. For example, as shown in FIG. 16A, four BMs 3010 (but not limited thereto, meaning that the number of BMs 3010 may vary depending on the practical applications of the BP 3030) and two lid modules 3090(a) and 3090(b) are stacked to form the BP 3030, wherein the lid modules 3090(a) and 3090(b) could be the aforementioned IM or TM, or other types of lid modules. In some embodiments, the BMs 3010 and the lid modules 3090(a) and 3090(b) may be assembled to form a liquid-tight BP enclosure with the BP-space 3032. By introducing thermal-management liquid into the BP-space 3032, the related BP components within the BP-space 3032 can be immersed in the thermal-management liquid for heat dissipation. For example, as shown in FIG. 16A, each BM 3010 comprises the liquid-tight LLC 0080 that provides a lateral fluid barrier (i.e., the peripheral wall 0090). The BMs 3010 are stacked to cooperatively form a BM stack, and the peripheral walls 0090 are also stacked to cooperatively form a stacked peripheral wall. The lid modules 3090(a) and 3090(b) are used as vertical lids to form the liquid-tight BP enclosure together with the stacked peripheral wall. To be noted, any two stacked BMs 3010 could adopts the aforesaid sealing design to prevent liquid leaking from the interface between the two stacked BMs 3010, and the related description could be reasoned by analogy according to FIG. 11A and FIG. 11B and is omitted herein.

As shown in FIG. 16A, the BP 3030 is communicated with the circulation and heat exchange system 3080 via liquid circulation pipes 3081, and each lid module may comprise at least one "interface liquid connector" 3091 (hereinafter, ILC) connected to the liquid circulation pipe 3081. The circulation and heat exchange system 3080 drives the thermal-management liquid to flow into the BP 3030 through one ILC 3091 in an inflow direction F1, then through the entire BP-space 3032, and out of the BP 3030 through another ILC 3091 in an outflow direction F2. The circulation and heat exchange system 3080 may comprise a heat exchanger or other means of regulating the temperature of the thermal-management liquid, so that the temperature can be adjusted before entering a next circulation for flowing into the BP 3030.

To be more specific, referring to FIG. 16A, the BP 3030 may comprise multiple structural features to guide the flow of the thermal-management liquid. As shown in FIG. 16A, each lid module comprises a lid vertical channel 3092, which is a through-hole extending in the vertical direction, allowing the thermal-management liquid to flow vertically within the through-hole. In some embodiments, the lid vertical channel 3092 is directly communicated with the ILC 3091 and the BP-space 3032, allowing the thermal-management liquid to flow into or out of the BP-space 3032 via the lid vertical channel 3092.

After the thermal-management liquid flows into the BP-space 3032 via the lid vertical channel 3092, the scope through which the thermal-management liquid may arrive or reach could be vertically divided into a lid module zone 3093 and a battery module zone 3011. Specifically, the lid module zone 3093 refers to a zone of the BP-space 3032 that is covered within each lid module. For example, the lid module 3090(a) in FIG. 16A may comprise an inner lid surface 3094. The lid module zone 3093 could be defined by a portion of the BP-space 3032 extending from a module interface reference line 3012 between the lid module 3090(a) and the BM 3010 to the inner lid surface 3094. Specifically, the battery module zone 3011 refers to a portion of the BP-space 3032 that is covered within the peripheral wall 0090 of the LLC 0080. With a tight fit between the lid module 3090(a) and the BM 3010 to prevent liquid leakage, the thermal-management liquid can flow from the lid module zone 3093 into the battery module zone 3011 through the module interface reference line 3012. The aforesaid liquid flow across the stacked BMs 3010 through the tubular openings of the LLCs 0080 is referred to as an LLC liquid flow 0081 in the present disclosure.

Please refer to FIG. 16B, which is a conceptual perspective diagram of a cross-sectional view of the BP 3030, wherein some reference numerals shown in FIG. 16A but not in FIG. 16B can be used in FIG. 16B.

Referring to FIG. 16B, in some situations, components or structures within the BP-space 3032 may generate flow resistance. For example, the BCA 0010 may at least comprise (but not limited thereto) the cell holder 0050, the BCs 0020, and the BCCMs 0026 (not shown in FIG. 16B). The LLC 0080 may also comprise the cell-holder stopping structures 0140 or other structures assembled with the cell holder 0050. These structures or components can generate vertical flow resistance or localized vortexes, affecting the uniformity of the flow field distribution and thus causing hotspots within the BP-space 3032, so as to lead to the heat dissipation problems.

Furthermore, since the thermal-management liquid enters the BP-space 3032 and flows sequentially through each BM 3010 in a one-by-one manner, this causes a first one of the BMs 3010 and a last one of the BMs 3010 to have different heat dissipation conditions. For example, in each circulation, the temperature of the thermal-management liquid after leaving the heat exchanger is in an initial state. The further the thermal-management liquid travels, the more the temperature of the thermal-management liquid deviates from the initial state. In the entire flow loop, the BM 3010 closest to a pump outlet 3082 is referred to as the closest BM 3010 (i.e., the first one of the BMs 3010), and the BM 3010 farthest from the pump outlet 3082 is referred to as the farthest BM 3010 (i.e., the last one of the BMs 3010). The temperature of the closest BM 3010 may be closest to the predetermined target temperature, or have the smallest fluctuation relative to the predetermined target temperature. On the other hand, the temperature of the farthest BM 3010 may have the largest difference from the predetermined target temperature, or have the largest fluctuation relative to the predetermined target temperature.

As shown in FIG. 16B, in this disclosure, the portion of the BP-space 3032 that vertically extends between the two cell holders 0050 in the BM 3010 could be defined as a cell zone 0051, and the portion of the BP-space 3032 that extends from the two cell holders 0050 to the tubular openings at top and bottom ends of the LLC 0080 are defined as edge zones 0052. As mentioned above, since the cell holders 0050 and other components connected to the cell holders 0050, such as BCCMs 0026, may generate the flow resistance, the flow resistance from the edge zone 0052 toward the cell zone 0051, or from the cell zone 0051 toward the edge zone 0052, is relatively large. In the aforementioned one-by-one manner where the flow channels are connected in series, the flow resistance will increase with the number of BMs 3010.

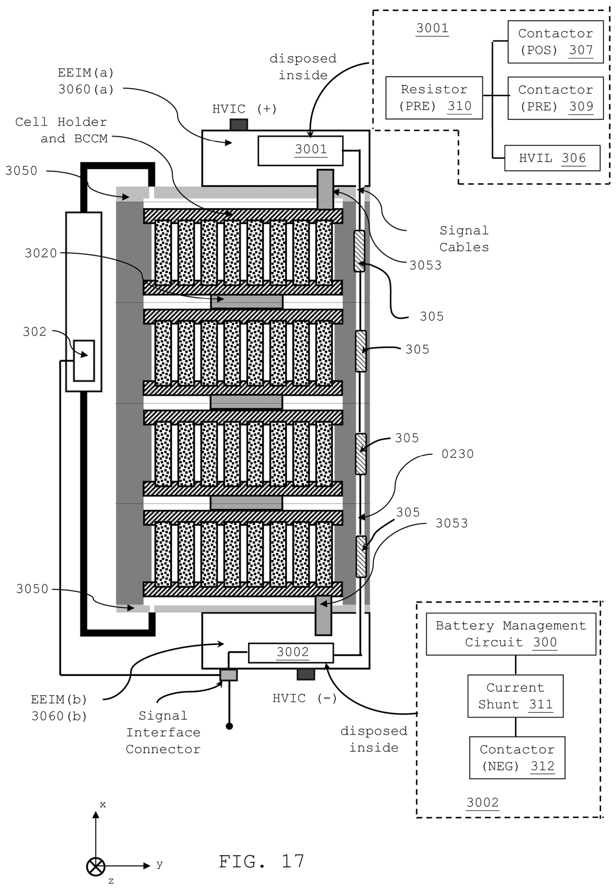

FIG. 17 is a conceptual diagram illustrating a physical configuration of the battery pack 3030 according to an embodiment of the present invention. This figure demonstrates how the circuit components, functional blocks, and connection interfaces described in FIG. 1B are physically arranged and integrated within the mechanical structure of the battery pack 3030.

In the embodiment shown in FIG. 17, the battery pack 3030 includes a plurality of battery modules 3010 stacked vertically. The battery pack 3030 further includes a first electrical energy interface module (EEIM) 3060a disposed at a first vertical end (e.g., a top end) of the stacked battery modules 3010, and a second electrical energy interface module (EEIM) 3060b disposed at a second vertical end (e.g., a bottom end) opposite to the first vertical end.

As shown in FIG. 17, the high-voltage switching circuit of FIG. 1B is physically divided into a first circuit module 3001 and a second circuit module 3002 based on their functions and connection relationships.

The first circuit module 3001 is accommodated within the first EEIM 3060a. The first circuit module 3001 includes the components associated with the positive terminal of the battery pack 3030. Specifically, the first circuit module 3001 includes the contactor (POS) 307, the contactor (PRE) 309, the resistor (PRE) 310, and the HVIL 306. A positive high-voltage interface connector (HVIC (+)) is also arranged on the first EEIM 3060a to electrically connect the first circuit module 3001 to an external load.

The second circuit module 3002 is accommodated within the second EEIM 3060b. The second circuit module 3002 includes the components associated with the negative terminal of the battery pack 3030. Specifically, the second circuit module 3002 includes the contactor (NEG) 312 and the current shunt 311. A negative high-voltage interface connector (HVIC (-)) is arranged on the second EEIM 3060b to electrically connect the second circuit module 3002 to the external load.

This distributed architecture, where the first circuit module 3001 (positive switching side) and the second circuit module 3002 (negative switching side) are physically separated at opposite vertical ends of the battery pack 3030, allows for efficient space utilization and improved thermal management by separating heat sources.

In some embodiments, the spaces within the first EEIM 3060a and the second EEIM 3060b are hydraulically isolated from the battery-pack space where the battery cells are immersed, such that the first circuit module 3001 and the second circuit module 3002 are not immersed in the thermal-management liquid. However, in other embodiments, these spaces can be configured to be hydraulically continuous with the battery-pack space to allow immersion cooling of the first circuit module 3001 and the second circuit module 3002.

The battery pack 3030 further utilizes the vertical-wall-channels 0230 of the LLCs 0080 of the battery modules 3010 to accommodate signal cables and interfaces. As shown in FIG. 17, the vertical-wall-channels 0230 of the stacked battery modules 3010 form a continuous vertical passage. Signal cables (represented by connecting lines in the channel) are arranged within this vertical passage to establish signal connections between the battery management circuit 300 (which may be disposed externally or connected via a connector) and the components located in different layers of the battery pack 3030.

For example, the cell monitoring circuit 305 is disposed within each of the battery modules 3010, physically close to the battery cells to perform precise measurements. The cell monitoring circuit 305 is signal-connected to the signal cables in the vertical-wall-channel 0230 via a signal interface. Through this vertical signal backbone, the measurement data from each cell monitoring circuit 305 can be transmitted upward to the battery management circuit 300. Similarly, control signals from the battery management circuit 300 can be transmitted downward through the vertical-wall-channel 0230 to control the contactor (NEG) 312 and receive data from the current shunt 311 located in the second circuit module 3002 inside the second EEIM 3060b.

Regarding the high-voltage loop (represented by thick lines), the electrical energy flows from the battery modules 3010, through the contactor (POS) 307 and the pre-charge circuit (309, 310) of the first circuit module 3001 to the HVIC (+), and flows from the battery modules 3010, through the current shunt 311 and the contactor (NEG) 312 of the second circuit module 3002 to the HVIC (-).

Regarding the low-voltage loop (represented by thin lines), the battery management circuit 300 is powered by power from an external source or the battery pack itself and is signally connected to the pump 302 to control the liquid circulation. The battery management circuit 300 is also connected to the signal cables within the vertical-wall-channel 0230 via a connector. This configuration enables the battery management circuit 300 to centrally manage the distributed first circuit module 3001, second circuit module 3002, and the cell monitoring circuits 305 across the entire battery pack 3030.

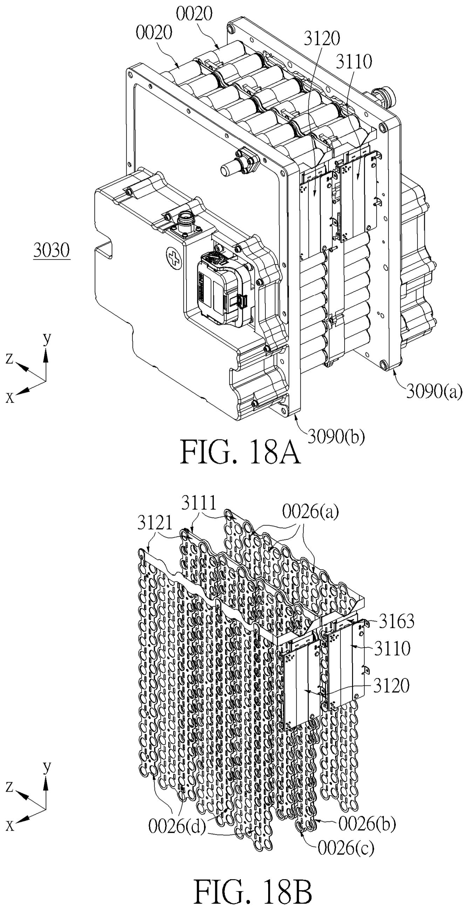

FIG. 18A illustrates a perspective view of the BP 3030, according to an example implementation of the present disclosure. FIG. 18B illustrates electronic connection structures of cell monitoring circuits 3110 and 3120 illustrated in FIG. 18A, according to example implementations of the present disclosure.
Components both mentioned in this embodiment and the aforesaid embodiments or with similar reference numerals represent components with similar structures or functions, and the related description is omitted herein.

With reference to FIG. 18A, in some embodiments, each of the BMs 3010 may include a corresponding one of the cell monitoring circuits 3110 and 3120 (i.e., the cell monitoring devices 0260 as shown in FIG. 12A) installed in a corresponding one of the BMs 3010. In some embodiments, the cell monitoring circuit 3110 may be electrically connected to the cell monitoring circuit 3120 for transmission of monitoring data or control signals. In some embodiments, an electrical connector of the cell monitoring circuit 3110 may be installed on the BM 3010 and may be exposed on the LLC 0080. An electrical connector of the cell monitoring circuit 3120 may be installed on the BM 3010 and may be exposed on the LLC 0080. When the BMs 3010 are connected to each other, the electrical connector of the cell monitoring circuit 3110 may also be directly or electrically connected to the electrical connector of the cell monitoring circuit 3120. Thus, the electrical connectors of the cell monitoring circuit 3110 and the cell monitoring circuit 3120 may not be exposed out of the BMs 3010 when the BMs are connected to each other.

In some embodiments, as FIGs 18A, 18B depicted, the BM 3010 may further comprise at least one PCB for certain functions. Such functional PCBs may be arranged in the BP-space 3032, or, as previously disclosed (see FIG.12A and its description), located in the vertical wall channel 0230, or located in both the two mentioned spaces.

In some embodiments, as FIG. 18B depicted, the BM 3010 may further comprise at least one FPC component for certain functions. Such functional FPC components may be arranged in the BP-space 3032, or, as previously disclosed (see FIG.12A and its description), located in the vertical wall channel 0230, or located in both the two mentioned spaces.

In some embodiments, as FIG. 18B depicted, the BM 3010 may further comprise at least one PCB-FPC interface 3163 that is configured for electrically or signally connect the PCB and the FPC. In some embodiments, the PCB-FPC interface 3163 may be a pair of inter-connectable connectors that is arranged on the PCB and the FPC respectively.

For example, as FIG. 18B depicted, each of the BM 3010 of the BP 3030 comprises a PCB that is arranged in the vertical wall channel 0230 (not shown in this figure), two FPC components that are arranged both in another vertical wall channel (or in the same vertical wall channel where the PCB is arranged), and in the BP-space 3032. The PCB-FPC interface 3163 is arranged in the vertical wall channel and on the PCB.

As FIG. 18B depicted, each of the two FPC components comprise a first part that is in the vertical wall channel and a second part that is in the BP-space 3032. In the vertical wall channel, the first parts of the two FPC components signally and eclectically connects to the PCB-FPC interfaces 3130 and to the PCB. In the vertical wall channel, the body of each of the first parts of FPC components extends along the vertical direction to a vertical position of the vertical wall channel; therefore, in such a vertical position, the body of each of the FPC continuously extends along the z-direction and therefore enters the BP-space 3032 (and this part is considered as the second part of the FPC).

In some embodiments, the second part of the FPC may extended in the BP-space 3032 along the lateral direction to directly attach on the BCA 0010 at any lateral direction to form electrical and/or signal connection to the BCA 0010.

For example, as FIG. 18B depicted, the second part of the FPC extends along the positive-y edge (along the z-direction) of the BCA 0010 and connects and contacts directly to each BCCM 0026.

For example, as FIG. 18B depicted, the second part of the FPC may further comprise branches that extends from the positive-y edge of the BCA 0010, along the negative-y-direction of the BCA 0010 to reach certain lateral positions of the BCA 0010 and connects and contacts directly to the BCCM 0026 at such certain lateral positions.

In some embodiments, the functional purpose of the PCB and FPC circuit configuration may be cell monitoring. For example, the PCB may be a cell monitoring device that comprises processors, controllers, drivers that are used to control sensors that sense the status of the BC 0020 or the BCA 0010. Such sensors and the connection for sensing may be arranged on the FPC components and form a loop to the PCB where the cell monitoring device is arranged.

In some embodiments, the functional purpose of the PCB and FPC circuit configuration may be BP heating. For example, the PCB may be a cell heating device that comprises processors, controllers, drivers that are used to control heaters that generate heat to warm the BP-space 3032. Such heaters and the connection for heating may be arranged on the FPC components and form a loop to the PCB where the cell monitoring device is arranged.

In some embodiments, each of the BMs 3010 may also include the plurality of BCs 0020. In some embodiments, the first one of the BMs 3010 may further include a plurality of BCCMs 0026(a) and a plurality of BCCMs 0026(b), and each of the BCs 0020 of the first one of the BMs 3010 may be electrically connected to one of the BCCMs 0026(a) and one of the BCCMs 0026(b). In some embodiments, the last one of the BMs 3010 may further include a plurality of BCCMs 0026(c) and a plurality of BCCMs 0026(d), and each of the BCs 0020 of the last one of the BMs 3010 may be electrically connected to one of the BCCMs 0026(c) and one of the BCCMs 0026(d). In some embodiments, the plurality of BCCMs 0026(a), BCCMs 0026(b), BCCMs 0026(c), and BCCMs 0026(d) may be used to electrically connect the BCs 0020 to each other. In addition, the BCs 0020 may be electrically connected to each other in series or in parallel by the plurality of BCCMs 0026(a), BCCMs 0026(b), BCCMs 0026(c), and BCCMs 0026(d). With reference to FIG. 18A, in some embodiments, one of the plurality of BCCMs 0026(a) may be electrically connected to the HVIC 3063 on the lid module 3090(a), and one of the plurality of BCCMs 0026(d) may be electrically connected to the HVIC 3063 on the lid module 3090(b). In addition, one of the plurality of BCCMs 0026(b) may be electrically connected to one of the plurality of BCCMs 0026(c). Thus, electrical power may be discharging from or stored into the BCs 0020 through the HVIC 3063 on the lid module 3090(a) and the HVIC 3063 on the lid module 3090(b).

In some embodiments, the cell monitoring circuit 3110 may be electrically connected to the BCCMs 0026(a) and 0026(b) and a plurality of cell sensing circuits 3111. The cell sensing circuits 3111 may be electrically connected to at least one of the BCCMs 0026(a) and at least one of the BCCMs 0026(b). In some embodiments, the BCCMs 0026(a) and 0026(b) and the cell sensing circuits 3111 may be accommodated in the BP-space 3032 of the BM 3010, such that the BCCMs 0026(a) and 0026(b) and the cell sensing circuits 3111 may be immersed in the thermal-management liquid contained in the BM 3010 for heat dissipation of the BCCMs 0026(a) and 0026(b) and the cell sensing circuits 3111. In some embodiments, the cell monitoring circuit 3120 may be electrically connected to the BCCMs 0026(c) and 0026(d) through a plurality of cell sensing circuits 3121. The plurality of cell sensing circuits 3121 may be electrically connected to the BCCMs 0026(c) and the BCCMs 0026(d). In some embodiments, the BCCMs 0026(c) and 0026(d) and the cell sensing circuits 3121 may be immersed in the thermal-management liquid contained in the BM 3010 for heat dissipation of the BCCMs 0026(c) and 0026(d) and the cell sensing circuits 3121. In some embodiments, the cell sensing circuits 3111 and 3121 may be flexible printed circuits (FPCs).

In some embodiments, the cell sensing circuits 3111 and 3121 may be used to measure voltages and temperatures of the BCCMs 0026(a), BCCMs 0026(b), BCCMs 0026(c), and BCCMs 0026(d) to provide measured results to the cell monitoring circuits 3110 and 3120. In some embodiments, the cell monitoring circuits 3110 and 3120 may control temperatures and voltages of the BCs 0020, and the cell sensing circuits 3111 and 3121 based on the measured results for controlling the temperature of the thermal-management liquid. For example, the cell monitoring circuit 3110 may control/use the cell sensing circuits 3111 to convert the electrical power of the BCs 0020, that each is electrically connected to the BCCMs 0026(a) and 0026(b), into heat for controlling the voltages and the temperatures of the BCs 0020. In some embodiments, the manner in which the cell monitoring circuits 3110 and 3120 control the temperatures and voltages of the BCs 0020, and further control the operation of the cell sensing circuits 3111 and 3121, may be accomplished through programmable driving signals. For example, the management circuit 3110 may generate switching control signals, current-limiting commands, or pulse-width-modulation (PWM) signals to cause a controlled current to pass through the BCs 0020 or through a heating component within the cell sensing circuit 3111. This controlled current may be converted into heat due to the internal resistance of the BCs 0020 or the heating component of the cell sensing circuits 3111, thereby increasing or stabilizing the temperature of the BCs 0020 or the thermal-management liquid. Similarly, voltage regulation may be achieved by adjusting the magnitude, duration, or duty cycle of the current supplied through the cell sensing circuit 3111, so as to control the voltage levels of the BCs 0020.

In some embodiments, the cell monitoring circuit 3120 may control/use the cell sensing circuits 3121 to convert the electrical power of the BCs 0020 into heat for controlling the voltages and the temperatures of the BCs 0020. Thus, the electrical power of the BCs 0020 may be directly used to heat the thermal-management liquid and the BCs 0020 for increasing the temperature of the thermal-management liquid when the cell monitoring circuits 3110 and 3120 controls the temperature of the cell sensing circuits 3111 and 3121. Therefore, due to functions of the voltage control and the temperature control of the cell monitoring circuits 3110 and 3120, there is no need to install additional heating equipment in the BM 3010. In addition, since the cell monitoring circuits 3110 and 3120, and the cell sensing circuits 3111 and 3121 may be installed in the BMs 3010 rather than exposed out of the BM 3010, the possibility of component damage may be decreased while the possibility of component durability may be increased. In some embodiments, the cell sensing circuits 3111 and 3121 may include heating traces that generate heat when a current flows through the cell sensing circuits 3111 and 3121 under the control of the cell monitoring circuits 3110 and 3120. Thus, the resistive losses produced by the cell sensing circuits 3111 and 3121 may be dissipated as thermal energy, and then the thermal energy may be transferred from the cell monitoring circuits 3110 and 3120 to the thermal-management liquid. In such a manner, the temperature of the thermal-management liquid may be increased without requiring additional heating components.

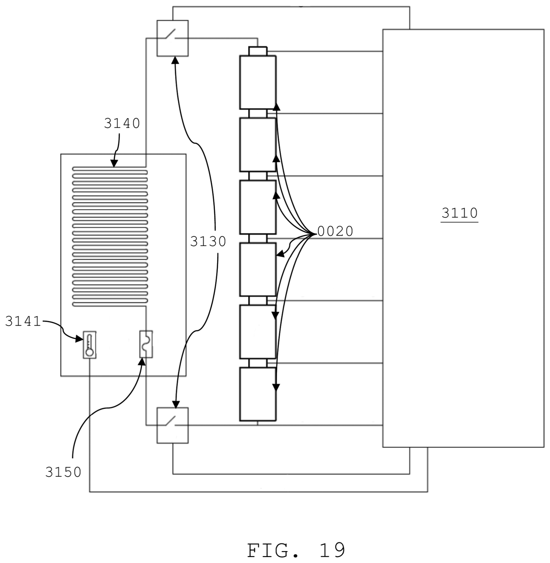

FIG. 19 illustrates a circuit diagram of the BCs 0020, the cell monitoring circuit 3110, and the cell sensing circuits 3111 illustrated in FIG. 18A and FIG. 18B, according to an example implementation of the present disclosure.

Components both mentioned in this embodiment and the aforesaid embodiments or with similar reference numerals represent components with similar structures or functions, and the related description is omitted herein.

With reference to FIG. 18B and FIG. 19, in some embodiments, the BM 3010 may further include one or more switches 3130 and a heating module 3140. In some embodiments, the one or more switches 3130 may be electrically connected to the BCs 0020, the cell monitoring circuit 3110, and the heating module 3140. In some embodiments, the cell monitoring circuit 3110 may send a switch signal to control the one or more switches 3130 to be turned ON or OFF. In some embodiments, when the one or more switches 3130 are turned OFF by the cell monitoring circuit 3110, the current of the BCs 0020 may not flow through the heating module 3140. Thus, the heating module 3140 may not convert the electrical power of the BCs 0020 into heat. In some embodiments, when the one or more switches 3130 are turned ON by the cell monitoring circuit 3110, the current of the BCs 0020 may flow through the heating module 3140. Thus, the heating module 3140 may convert the electrical power of the BCs 0020 into heat to heat the BCs 0020 and the thermal-management liquid contained in the BM 3010. In some embodiments, the heating module 3140 may be a heating copper trace. In some embodiments, the cell monitoring circuit 3110 may control the one or more switches 3130 by generating driving signals, such as gate-control voltages, base currents, or pulse-width-modulated signals, depending on the type of the switch 3130 (e.g., MOSFETs, BJTs, or other semiconductor switching devices). These driving signals may selectively drive the one or more switches 3130 into a turned-off state or a turned-on state. To be noted, in practical applications, the BM 3010 could comprise at least two of the cell monitoring circuits, the cell sensing circuits and the heating module.

In some embodiments, the BM 3010 may further include an electrical safety device 3150 electrically connected to the one or more switches 3130 and the heating module 3140. In some embodiments, the electrical safety device 3150 may include a wire or strip of fusible metal that melts or interrupts the circuit when the current exceeds a threshold current. Thus, when the current of the heating module 3140 exceeds the threshold current, the electrical safety device 3150 may shut down the current to stop heating the thermal-management liquid and the BCs 0020. In some embodiments, when the electrical safety device 3150 melts due to the excessive current, the conductive path between the one or more switches 3130 and the heating module 3140 may be physically broken. As a result, the electrical connection that supplies current to the heating module 3140 may be interrupted, causing the heating module 3140 to stop receiving electrical power. Therefore, the heating module 3140 may immediately stop generating heat, thereby shutting down the heating operation for the thermal-management liquid and the BCs 0020.

In some embodiments, the heating module 3140 may further include a temperature sensor 3141 electrically connected to the cell monitoring circuit 3110. The cell monitoring circuit 3110 may control the temperature sensor 3141 to monitor the temperature of the thermal-management liquid and the BCs 0020. In some embodiments, the cell monitoring circuit 3110 may control the temperature sensor 3141 by providing sensing-control signals to activate the temperature-measurement function of the temperature sensor 3141. For example, the cell monitoring circuit 3110 may periodically send a reference voltage or current to the cell monitoring circuit 3110 so that the temperature sensor 3141 may generate a temperature sensing signal. The cell monitoring circuit 3110 may then receive the temperature sensing signal to determine the temperature of the thermal-management liquid and the BCs 0020. To be noted, the functional purpose of the aforesaid cell sensing circuits still comprise temperature sensing, and the cell sensing circuits and the temperature sensor 3141 sense temperatures of different components in the BP 3030.

Therefore, the electrical power of the BCs 0020 may be directly used to heat the thermal-management liquid and the BCs 0020. Due to the functions of voltage control and temperature control of the cell monitoring circuit 3110, no additional heating equipment may be required to be installed in the BM 3010. In addition, since the cell monitoring circuit 3110, the one or more switches 3130 and the heating module 3140 may be all installed within the BM 3010 rather than being exposed out of the BM 3010, the possibility of damaging the cell monitoring circuit 3110 and the cell sensing circuits 3111 may be decreased and the durability of the cell monitoring circuit 3110 and the cell sensing circuits 3111 may be increased.

In some embodiments, the cell sensing circuit 3111 may increase the temperature of the thermal-management liquid because the heating module 3140 (e.g., a heating copper trace or resistive element) may generate heat when a current flows through the heating module 3140. When the cell monitoring circuit 3110 turns ON the one or more switches 3130, the current may pass through the heating module 3140, and the resistive losses produced by the heating module 3140 may be converted into thermal energy. As such, the thermal energy may be transferred to the thermal-management liquid, thereby increasing the temperature of the thermal-management liquid.

In some embodiments, the PCB (e.g., cell monitoring circuit 3110) may further comprise a vertical stacking connector 3160 disposed at a vertical end of the at least one battery module.

This vertical stacking connector 3160 may be configured to be the signal interface between the PCB (e.g., cell monitoring circuit 3110)of the underlying BM 3010 and another PCB (e.g., cell monitoring circuit 3110)of an adjacent BM 3010. The vertical stacking connector 3160 may electrically couple the two adjacent BMs (i.e., the BMs 3010 that stacked directly with each other).

In some embodiments, the two vertical stacking connectors 3160 that are configured to be connected with each other may be configured to achieve blind-mating (or automatic mating). This blind-mating capability means that the connectors are mechanically self-aligning upon the vertical stacking of the BMs 3010, ensuring a fast and reliable electrical connection. This feature significantly enhances the efficiency and automation level of the battery pack manufacturing process.

In some embodiments, the PCB (e.g., the cell monitoring circuit 3110) disposed within the vertical-wall-channel 0230 may further comprise a vertical interface connector 3162 disposed at a vertical end thereof.

The vertical interface connector 3162 is configured to electrically connect the circuit board to a corresponding connector disposed on one of the two lid modules 3090 when the BM 3010 and the lid module 3090 are vertically assembled. The primary purpose of this connection is to transmit state information (such as voltage, temperature, or current) collected by the circuit board to the main electronic control unit located in the lid module 3090.

Specifically, the EEIM 3060 disposed on one of the two lid modules 3090 is configured to house or be electrically coupled to a circuit for battery management for further processing or control.

In some implementations, the vertical stacking connector 3160 and the vertical interface connector 3162 may be implemented as a single physical connector located on the circuit board, wherein the single connector is configured with separate pins or contacts to perform both the module-to-module stacking connection and the module-to-EEIM signal interface functions.

Accordingly, the vertical interface connector 3162 is configured to electrically connect the circuit board 3110 to the circuit for battery management residing within the EEIM 3060. This arrangement facilitates the modular transmission of precise cell data directly to the circuit for battery management for control and protection purposes, thereby substantially improving the modularity and serviceability of the battery pack.

The embodiments shown and described above are only examples. Many details are often found in the art. Therefore, many such details are neither shown nor described. Even though numerous characteristics and advantages of the present disclosure have been set forth in the foregoing description, together with details of the structure and function of the present disclosure, the present disclosure is illustrative only, and changes may be made in the details. It will therefore be appreciated that the embodiment described above may be modified within the scope of the claims.

## Claims

1. A battery pack (3030), **characterized by** comprising:
a charging-discharging circuit (0040) comprising at least one battery cell assembly (0010) that comprises a plurality of battery cells (0020) that are mechanically and electrically integrated;
a battery-pack enclosure (3031) that accommodates the charging-discharging circuit (0040);
at least one high-voltage interface connector (3063) that is disposed on the battery-pack enclosure (3031) and configured to transmit high-voltage power between the battery pack (3030) and an external electrical equipment;
a high-voltage switching circuit disposed within the battery pack (3030) and configured to selectively open and close a high-voltage electrical connection between the charging-discharging circuit (0040) and the external electrical equipment; and
a battery management circuit (300) disposed within the battery pack (3030) and configured to control and drive the high-voltage switching circuit;
wherein the battery-pack enclosure (3031) is formed by at least one tubing-shaped casing (0080) stacked vertically as a tube stack, and two lid modules (3090a, 3090b) respectively covering opposite ends of the tube stack, thereby forming the battery-pack enclosure (3031) configured to provide an insulating barrier that isolates the at least one battery cell assembly (0010) from an exterior of the battery pack (3030); and the two lid modules (3090a, 3090b) comprise a first lid module (3090a) and a second lid module (3090b).

2. The battery pack (3030) of claim 1, **characterized in that** the at least one tubing-shaped casing (0080) is a liquid-limiting casing (0080); and wherein the battery-pack enclosure (3031) is configured to be liquid-tight so as to define a battery-pack space (3032) for accommodating a thermal-management liquid, such that the charging-discharging circuit (0040) is immersed in the thermal-management liquid when the thermal-management liquid is introduced in the battery-pack space (3032).

3. The battery pack (3030) of claim 1, **characterized in that** the at least one of the first lid module (3090a) and the second lid module (3090b) is an interface module (3050); wherein the battery pack (3030) further comprises at least one electrical energy interface module (3060) disposed on the at least one interface module (3050); and wherein the high-voltage switching circuit comprises a positive contactor (307) and a negative contactor (312) accommodated in the at least one electrical energy interface module (3060).

4. The battery pack (3030) of claim 3, **characterized in that** the first lid module (3090a) is disposed at a first vertical end of the tube stack and the second lid module (3090b) is disposed at a second vertical end of the tube stack; and wherein the first lid module (3090a) and the second lid module (3090b) are both interface modules (3050), with a first electrical energy interface module (3060a) being disposed on the first lid module (3090a) and a second electrical energy interface module (3060b) being disposed on the second lid module (3090b).

5. The battery pack (3030) of claim 4, **characterized in that** the high-voltage switching circuit and the battery management circuit (300) are functionally divided into a first circuit module (3001) and a second circuit module (3002); wherein the first circuit module (3001) is accommodated in the first electrical energy interface module (3060a) and comprises the positive contactor (307), a pre-charge contactor (309), a pre-charge resistor (310), and a high-voltage interlock loop (306); and wherein the second circuit module (3002) is accommodated in the second electrical energy interface module (3060b) and comprises the negative contactor (312) and a current shunt (311).

6. The battery pack (3030) of claim 5, **characterized in that** each of the at least one tubing-shaped casing (0080) comprises a vertical-wall-channel (0230); wherein the battery pack (3030) further comprises a signal line arranged in the vertical-wall-channel (0230); and wherein the signal line electrically connects a low-voltage loop of the first circuit module (3001) and a low-voltage loop of the second circuit module (3002) for control signal transmission.

7. The battery pack (3030) of claim 5, **characterized in that** the charging-discharging circuit (0040) is electrically connected to the positive contactor (307) and the pre-charge contactor (309) of the first circuit module (3001) and is electrically connected to the current shunt (311) and the negative contactor (312) of the second circuit module (3002).

8. The battery pack (3030) of claim 3, **characterized in that** the first lid module (3090a) is disposed at a first vertical end of the tube stack and is an interface module (3050); and wherein the second lid module (3090b) is disposed at a second vertical end of the tube stack and is a terminal module (3040).

9. The battery pack (3030) of claim 8, **characterized in that** the high-voltage switching circuit comprises the positive contactor (307), a pre-charge contactor (309), a pre-charge resistor (310), a high-voltage interlock loop (306), the negative contactor (312), and a current shunt (311), which are all accommodated in the electrical energy interface module (3060).

10. The battery pack (3030) of claim 9, **characterized in that** each of the at least one tubing-shaped casing (0080) comprises a vertical-wall-channel (0230); wherein the battery pack (3030) further comprises a signal line arranged in the vertical-wall-channel (0230); and wherein the signal line electrically connects a low-voltage loop of the high-voltage switching circuit.

11. The battery pack (3030) of claim 10, **characterized in that** the charging-discharging circuit (0040) is electrically connected to the positive contactor (307), the pre-charge contactor (309), and the current shunt (311) accommodated in the electrical energy interface module (3060).

12. The battery pack (3030) of claim 10, **characterized in that** the vertical-wall-channels (0230) of the at least one tubing-shaped casing (0080) are aligned to form a continuous vertical through-hole penetrating through the tube stack; wherein the battery pack (3030) further comprises a conductor rod (0280) accommodated in the continuous vertical through-hole; and wherein the conductor rod (0280) is configured to electrically connect an electrode of the charging-discharging circuit (0040) disposed at the second vertical end to the electrical energy interface module (3060) disposed at the first vertical end.

13. The battery pack (3030) of claim 3, **characterized in that** each of the at least one battery cell assembly (0010) comprises a cell monitoring circuit (305) disposed within the tubing-shaped casing (0080); wherein the cell monitoring circuit (305) comprises a vertical interface connector (3162) disposed at a vertical end of the tubing-shaped casing (0080); and wherein the vertical interface connector (3162) is configured to electrically connect the cell monitoring circuit (305) to the battery management circuit (300) accommodated in the electrical energy interface module (3060) to transmit a state of the plurality of battery cells (0020).

14. The battery pack (3030) of claim 2, **characterized by** further comprising a sealing member (0200) arranged at an interface between two adjacent stacked tubing-shaped casings (0080) or at an interface between the tubing-shaped casing (0080) and one of the two lid modules (3090a, 3090b); wherein at least one of the tubing-shaped casing (0080) or the two lid modules (3090a, 3090b) comprises a sealing-member-accommodating structure (0220) configured to accommodate and position the sealing member (0200) to seal the battery-pack space (3032).

15. The battery pack (3030) of claim 5, **characterized in that** the battery management circuit (300) is accommodated in the first electrical energy interface module (3060a); wherein the at least one tubing-shaped casing (0080) comprises a vertical-wall-channel (0230) having a signal line disposed therein, the signal line electrically connecting the first electrical energy interface module (3060a) and the second electrical energy interface module (3060b); and wherein the battery management circuit (300) is configured to transmit a control signal via the signal line to the second electrical energy interface module (3060b) to control an open state or a closed state of the negative contactor (312).
